# EUROPEAN PATENT APPLICATION

(11) **EP 4 708 411 A1**
(43) Date of publication of application: **11.03.2026**
(21) Application number: 25198881.2
(22) Date of filing: 28.08.2025
(51) Int. Cl.: H01M 8/04119, H01M 8/04828

(54) **FUEL CELL SYSTEM AND MONO-GENERATION APPARATUS**

(30) Priority: 30.08.2024 JP 2024148581
(71) Applicant: Yanmar Holdings Co., Ltd., Osaka-shi, Osaka (JP)
(72) Inventor: TAKAHASHI, Tomohiro, Osaka (JP); AMAKAWA, Shohei, Osaka (JP); ITO, Ryosuke, Osaka (JP)
(74) Representative: Sekiguchi, Kazuya

(57) **Abstract**

[Problem] Provided is a fuel cell system capable of reducing a risk that drain water is discharged from an exhaust path together with exhaust gas and scattered around.

[Solution] A fuel cell system includes a fuel cell module and a drain portion. The drain portion is disposed to be branched from an exhaust path of the fuel cell module.

## Description

### TECHNICAL FIELD

The present invention relates to a fuel cell system and a mono-generation apparatus.

### BACKGROUND ART

Conventionally, a cogeneration apparatus to which a gas engine system is applied has been known (see, for example, Patent Document 1).

### PRIOR ART DOCUMENT

### PATENT DOCUMENT

Patent Document 1: JP 6321484 B2

### SUMMARY OF INVENTION

### TECHNICAL PROBLEM

In recent years, from the viewpoint of carbon neutrality, a cogeneration apparatus using a fuel cell system is desired. In the fuel cell system, air after oxygen consumption (hereinafter, also referred to as exhaust gas) and drain water are discharged as exhaust fluid from a fuel cell module. When the drain water is discharged to the outside of the system together with the exhaust gas from an outlet of an exhaust path for the exhaust fluid, there is a risk that the drain water is scattered around along with the discharge of the exhaust gas. Such a problem may similarly occur in a mono-generation apparatus that does not use waste heat but only generates power.

The present invention has been made to solve the above problem, and an object of the present invention is to provide a fuel cell system and a mono-generation apparatus capable of reducing a risk that drain water is discharged from an exhaust path together with exhaust gas and scattered around.

### SOLUTION TO PROBLEM

A fuel cell system according to one aspect of the present invention is a fuel cell system including a fuel cell module and a drain portion disposed to be branched from an exhaust path of the fuel cell module.

A mono-generation apparatus according to another aspect of the present invention includes the fuel cell system described above.

### ADVANTAGEOUS EFFECTS OF INVENTION

According to the present invention, it is possible to reduce a risk that drain water is discharged from an exhaust path together with exhaust gas and scattered around.

### BRIEF DESCRIPTION OF DRAWINGS

Fig. 1A is a perspective view illustrating a schematic configuration of an external appearance of a fuel cell system;
Fig. 1B is a perspective view illustrating the schematic configuration of the external appearance of the fuel cell system;
Fig. 2 is a block diagram for describing an outline of a configuration related to power generation of the fuel cell system;
Fig. 3 is a block diagram illustrating a schematic configuration of a cooling system included in the fuel cell system;
Fig. 4A is a front view illustrating a schematic configuration of the inside of a housing;
Fig. 4B is a rear view illustrating the schematic configuration of the inside of the housing;
Fig. 5 is a diagram illustrating a schematic configuration of a cross section in a case where the housing illustrated in Figs. 4A and 4B is cut at a V-V position;
Fig. 6A is a front view of an exhaust path as viewed from the front;
Fig. 6B is a perspective view of the exhaust path;
Fig. 7 is a side view illustrating an internal configuration of a silencer;
Fig. 8 is a perspective view illustrating the internal configuration of the silencer;
Fig. 9 is a front view schematically illustrating an internal configuration of a main body case on the rear side of a partition wall;
Fig. 10 is a front view schematically illustrating another configuration of the exhaust path of the fuel cell system;
Fig. 11 is a perspective view of a right side surface upper cover of the housing;
Fig. 12 is a perspective view of a right front upper pillar of the housing;
Fig. 13A is a perspective view of a front side surface upper right cover of the housing as viewed from the right front;
Fig. 13B is a perspective view of the front side surface upper right cover as viewed from the left front;
Fig. 14A is a perspective view illustrating a step in a procedure for attaching the right front upper pillar and the front side surface upper right cover to a frame included in the housing;
Fig. 14B is a perspective view illustrating a next step in the procedure;
Fig. 14C is a perspective view illustrating a further next step in the procedure; and
Fig. 14D is a perspective view illustrating a further next step in the procedure.

### DESCRIPTION OF EMBODIMENTS

An embodiment of the present invention will be described with reference to the drawings. Note that, in the drawings, the same or equivalent parts are denoted by the same reference numerals, and the description thereof will not be repeated unless otherwise required.

### <1. Outline of fuel cell system>

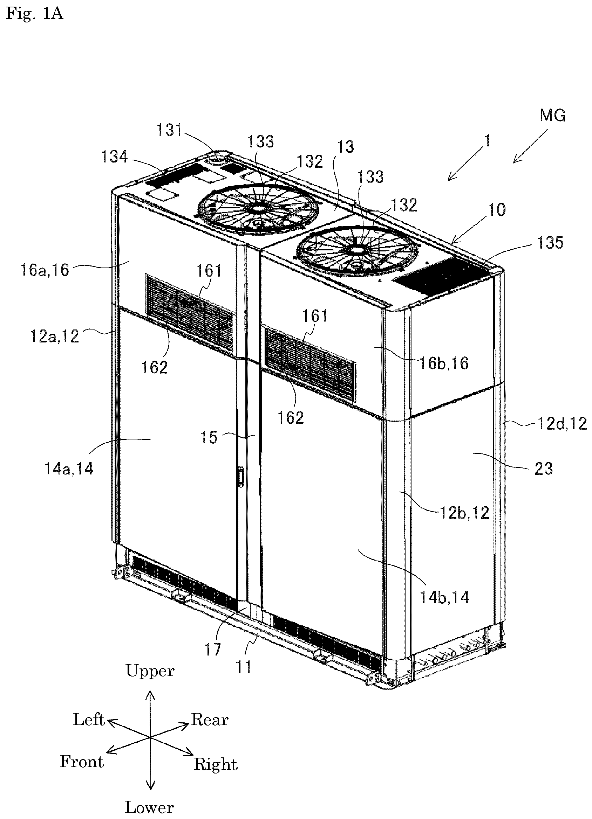

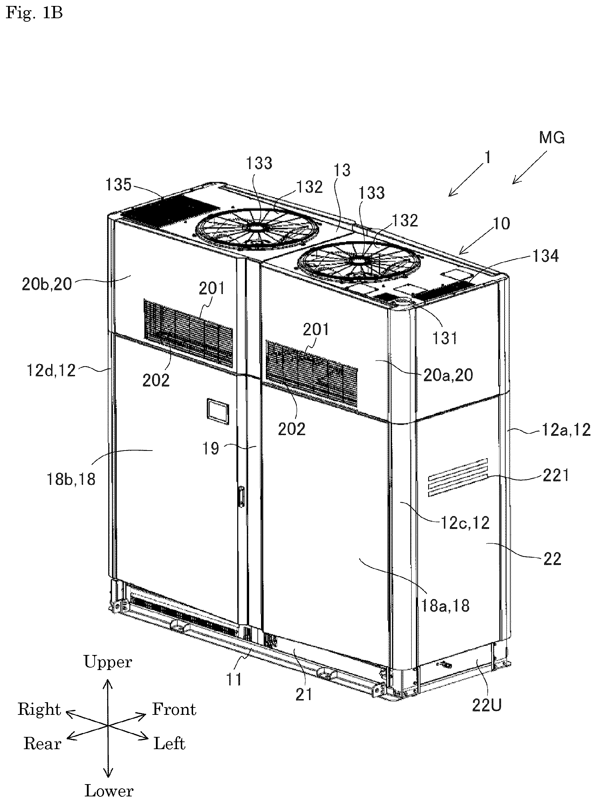

Figs. 1A and 1B are perspective views illustrating a schematic configuration of an external appearance of a fuel cell system 1 according to the embodiment of the present invention. The fuel cell system 1 can be applied to, for example, a mono-generation apparatus MG. The mono-generation apparatus MG is a system that does not use waste heat but only generates power unlike a cogeneration apparatus. The mono-generation apparatus MG may be configured by the single fuel cell system 1 or may be configured by a plurality of fuel cell systems 1 in combination. As described above, the mono-generation apparatus MG includes the fuel cell system 1.

Note that the fuel cell system 1 can also be applied to a cogeneration apparatus. The cogeneration apparatus is a heat and power supply system that generates power and recovers waste heat generated by the power generation to use the heat for, for example, hot water supply or room heating. Similarly to the mono-generation apparatus MG, the cogeneration apparatus may be configured by the single fuel cell system 1, or may be configured by a plurality of fuel cell systems 1 in combination.

For example, the fuel cell system 1 can be used as a generator in a home, a factory, or the like. In Figs. 1A and 1B, the fuel cell system 1 is viewed in different directions. As illustrated in Figs. 1A and 1B, the fuel cell system 1 includes a housing 10. The housing 10 has a rectangular parallelepiped shape. However, the shape of the housing 10 may be appropriately changed.

In the following description of the fuel cell system 1, directions are defined as follows. The direction orthogonal to the horizontal floor surface (not illustrated) on which the housing 10 of the fuel cell system 1 is disposed is defined as a vertical direction, and the upper and lower sides are defined such that the side on which the housing 10 is disposed relative to the floor surface is an upper side. In addition, the longitudinal direction of the housing 10 having a rectangular shape in plan view is defined as a left-right direction, and the lateral direction is defined as a front-rear direction. The front and rear are defined such that one of the two side surfaces arranged in the front-rear direction is a front side and the other is a rear side, as illustrated in Figs. 1A and 1B. With the front and rear defined in Figs. 1A and 1B as a reference, left and right are defined such that the left side seen from the front is left and the right side seen from the front is right.

Note that these directions are names used merely for description, and are not intended to limit the actual positional relationships and directions. Furthermore, according to the definition of the above-described directions, Fig. 1A is a perspective view of the front side of the housing 10 as viewed from obliquely upper right, and Fig. 1B is a perspective view of the rear side of the housing 10 as viewed from obliquely upper left.

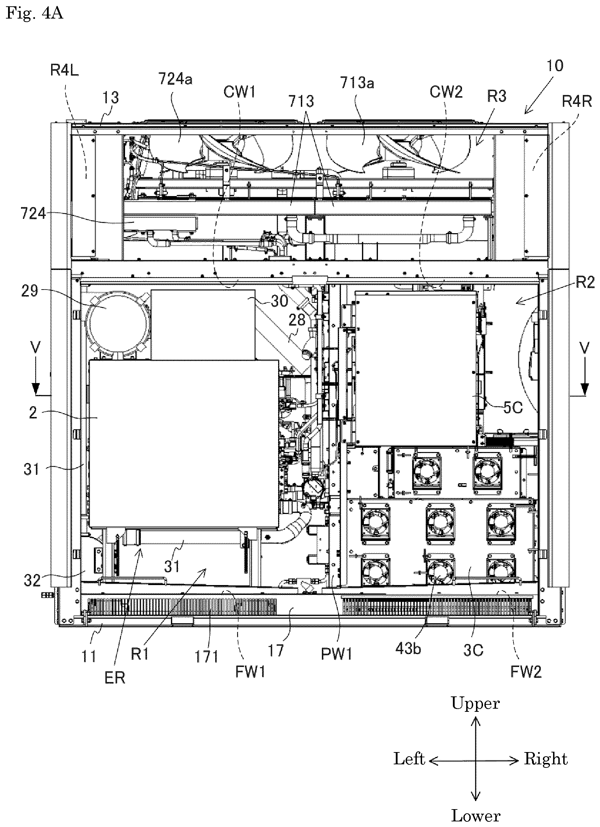

The housing 10 accommodates a fuel cell module 2 (see Fig. 4A and the like described later). The fuel cell system 1 generates power using the fuel cell module 2 and fuel gas and oxidant gas supplied from the outside. In the present embodiment, hydrogen gas is used as the fuel gas, and air is used as the oxidant gas. However, the fuel gas is not limited to the hydrogen gas, and may be, for example, a gas containing methane as a main component. The oxidant gas is not limited to air, and may be any gas containing oxygen.

### [1-1. Configuration related to power generation]

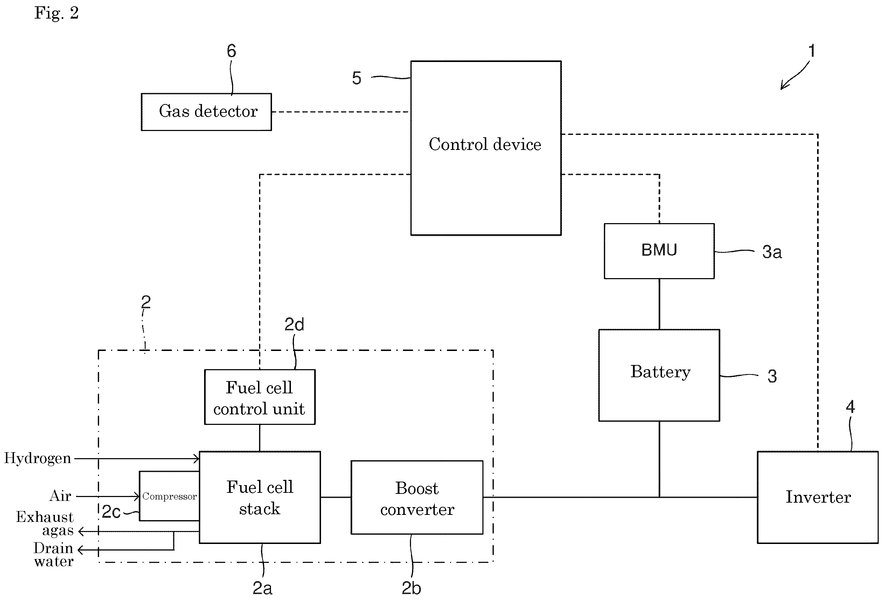

Here, a configuration related to power generation of the fuel cell system 1 including the fuel cell module 2 will be briefly described with reference to Fig. 2. Fig. 2 is a block diagram for describing an outline of the configuration related to power generation of the fuel cell system 1 according to the embodiment of the present invention.

As illustrated in Fig. 2, the fuel cell system 1 includes the fuel cell module 2, a battery 3, an inverter 4, and a control device 5.

Specifically, the fuel cell module 2 includes a fuel cell stack 2a, a boost converter 2b, a compressor 2c, and a fuel cell control unit 2d.

The fuel cell stack 2a includes a plurality of stacked cells. Each cell includes a solid polymer electrolyte membrane, an anode electrode, a cathode electrode, and a pair of separators. The anode electrode and the cathode electrode sandwich the solid polymer electrolyte membrane. The anode electrode is a negative electrode (fuel electrode), and includes an anode catalyst layer and a gas diffusion layer. The cathode electrode is a positive electrode (air electrode), and includes a cathode catalyst layer and a diffusion layer. The anode electrode, the solid polymer electrolyte membrane, and the cathode electrode constitute a membrane electrode assembly (MEA). The pair of separators sandwiches the membrane electrode assembly. Each separator has a plurality of grooves. Each groove of one separator forms a flow path for hydrogen (hydrogen gas). Each groove of the other separator forms a flow path for air.

On the anode electrode side, hydrogen is decomposed into hydrogen ions and electrons by a catalyst. The hydrogen ions pass through the solid polymer electrolyte membrane and move to the cathode electrode. Meanwhile, the electrons move to the cathode electrode through an external circuit. As a result, a current is generated. That is, the fuel cell stack 2a generates power. On the cathode electrode side, oxygen contained in air is combined with the electrons flowing through the external circuit and the hydrogen ions passing through the solid polymer electrolyte membrane to generate water. The generated water is contained in exhaust gas and discharged to the outside of the fuel cell system 1. The power generated by the fuel cell stack 2a is boosted by the boost converter 2b and supplied to at least one of the battery 3 and the inverter 4.

The compressor 2c is provided in the fuel cell stack 2a to take in air from the outside of the fuel cell system 1. The air taken into the fuel cell system 1 by the compressor 2c flows into the fuel cell stack 2a through a plurality of filters (none of which are illustrated) provided in the fuel cell system 1.

The fuel cell control unit 2d controls each unit of the fuel cell module 2. For example, the fuel cell control unit 2d controls output (power generation) of the fuel cell stack 2a, driving of the compressor 2c, and the like. The fuel cell control unit 2d is communicably connected to the control device 5. For example, the fuel cell control unit 2d transmits information on the fuel cell module 2 to the control device 5 by communication.

The battery 3 includes, for example, a lithium ion battery, and stores power to be supplied to the inverter 4. The battery 3 may be configured by unitizing a plurality of battery cells, or may be configured by a single battery cell. In addition, the battery 3 is configured to be able to receive power generated by the fuel cell stack 2a. When power is supplied from the fuel cell stack 2a to the battery 3, the battery 3 is charged.

The battery 3 is controlled by a battery management unit (BMU) 3a. The BMU 3a controls, for example, input and output (charge and discharge) of the battery 3. In addition, the BMU 3a calculates the charging rate of the battery 3 on the basis of information (for example, a voltage value, a current value, a temperature, and the like) acquired via various sensors (not illustrated) provided in the battery 3. The charging rate of the battery 3 is also called a state of charge (SOC), and means a rate of a remaining charge capacity (at that time) relative to a charge capacity at the time of full charge.

The BMU 3a is communicably connected to the control device 5. The BMU 3a transmits, for example, information on the battery 3 acquired by the BMU 3a (the charging rate calculated by the BMU 3a or the like) to the control device 5 by communication.

The inverter 4 includes a substrate (not illustrated) on which various electric components (for example, a diode, a capacitor, a power transistor, and the like) are mounted. The inverter 4 converts DC voltage power supplied from at least one of the fuel cell stack 2a and the battery 3 into AC voltage power, and outputs the AC voltage power to the outside of the fuel cell system 1.

The inverter 4 is communicably connected to the control device 5. The inverter 4 adjusts the output (output power) of the inverter 4, for example, on the basis of an output command output from the control device 5. In addition, the inverter 4 transmits information on the output of the inverter 4 to the control device 5 by communication.

The control device 5 performs overall control of the fuel cell system 1. The control device 5 appropriately controls each unit communicably connected to the control device 5. The control device 5 is, for example, a computer device including an arithmetic device, an input/output unit, and a storage unit. The arithmetic device is, for example, a processor or a microprocessor. The storage unit is a main storage device such as a read only memory (ROM) or a random access memory (RAM). The storage unit may further include an auxiliary storage device such as a hard disk drive (HDD) or a solid state drive (SSD).

In addition, as illustrated in Fig. 2, the fuel cell system 1 includes a gas detector 6 for the purpose of ensuring safety related to hydrogen usage during power generation using the fuel cell module 2. The gas detector 6 detects leakage of hydrogen as fuel gas supplied to the fuel cell module 2. The gas detector 6 is communicably connected to the control device 5, and outputs hydrogen detection information in the housing 10 to the control device 5. The control device 5 issues an alarm or executes a system stop measure according to the acquired hydrogen detection information.

### [1-2. Cooling system]

The fuel cell system 1 includes a cooling system provided for the fuel cell module 2 described above. The cooling system will also be briefly described.

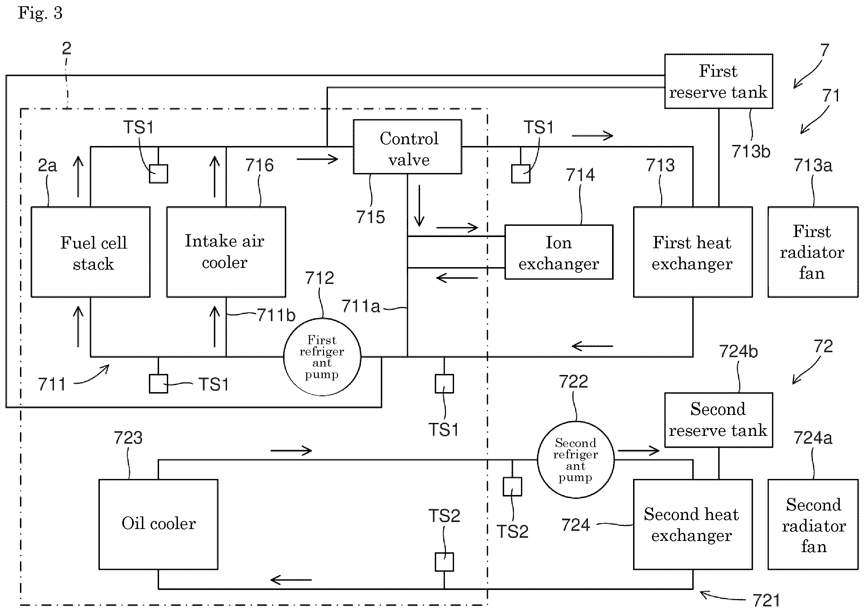

Fig. 3 is a block diagram illustrating a schematic configuration of a cooling system 7 included in the fuel cell system 1 according to the embodiment of the present invention. The cooling system 7 includes a first cooling system 71 and a second cooling system 72. The first cooling system 71 is a cooling system that cools the fuel cell stack 2a included in the fuel cell module 2. The second cooling system 72 is a cooling system for an oil cooler (an oil cooler 723 described later) that cools auxiliary machines included in the fuel cell module 2.

### (1-2-1. First cooling system)

The first cooling system 71 includes a first refrigerant circulation path 711, a first refrigerant pump 712, a first heat exchanger 713, an ion exchanger 714, a control valve 715, an intake air cooler 716, and a plurality of first temperature sensors TS1. Note that the first refrigerant pump 712, the control valve 715, the intake air cooler 716, and a part of the first temperature sensors TS1 are included in the fuel cell module 2.

The first refrigerant circulation path 711 is a flow path for circulating a first refrigerant. In the present embodiment, cooling water is used as the first refrigerant, but the first refrigerant is not limited thereto. For example, cooling oil may be used as the first refrigerant, or cooling gas may be used.

The first refrigerant circulation path 711 is connected to the fuel cell stack 2a, the first refrigerant pump 712, the first heat exchanger 713, the ion exchanger 714, the control valve 715, and the intake air cooler 716. More specifically, the fuel cell stack 2a, the first refrigerant pump 712, and the first heat exchanger 713 are connected in series. The ion exchanger 714 is connected in parallel to the first heat exchanger 713. Specifically, the first refrigerant circulation path 711 is provided with a first bypass flow path 711a connecting a flow path between the first heat exchanger 713 and the first refrigerant pump 712 and a flow path between the fuel cell stack 2a and the first heat exchanger 713. The ion exchanger 714 is connected in parallel to the first bypass flow path 711a. The control valve 715 is provided at a connection portion between the first bypass flow path 711a and the flow path between the fuel cell stack 2a and the first heat exchanger 713.

The intake air cooler 716 is connected in parallel to the fuel cell stack 2a. Specifically, the first refrigerant circulation path 711 is provided with a second bypass flow path 711b connecting a flow path between the first refrigerant pump 712 and the fuel cell stack 2a and the flow path between the fuel cell stack 2a and the first heat exchanger 713 (specifically, the control valve 715). The intake air cooler 716 is connected in series to the second bypass flow path 711b.

The first temperature sensors TS1 are provided in the flow path between the first refrigerant pump 712 and the fuel cell stack 2a and in a flow path between the fuel cell stack 2a and the control valve 715. In addition, the first temperature sensors TS1 are provided in a flow path between the control valve 715 and the first heat exchanger 713 and in the flow path between the first heat exchanger 713 and the first refrigerant pump 712. The first temperature sensors TS1 detect the temperature of the first refrigerant circulating in the first refrigerant circulation path 711. Note that the number and disposition of the first temperature sensors TS1 may be appropriately changed.

The first refrigerant pump 712 is configured by an electric pump, and is driven by power supplied from the control device 5 (see Fig. 2). When the first refrigerant pump 712 is driven, the first refrigerant circulates in the first refrigerant circulation path 711. More specifically, the first refrigerant discharged from the first refrigerant pump 712 flows into each of the fuel cell stack 2a and the intake air cooler 716. The first refrigerant flowing into the fuel cell stack 2a flows inside the fuel cell stack 2a. Specifically, the first refrigerant flowing into the fuel cell stack 2a passes through the plurality of cells constituting the fuel cell stack 2a. As a result, the fuel cell stack 2a is cooled.

The intake air cooler 716 cools air (intake air) supplied to the fuel cell stack 2a by the compressor 2c. Specifically, the air taken in from the outside of the fuel cell system 1 by the compressor 2c hits the intake air cooler 716. The air that has hit the intake air cooler 716 is cooled by exchanging heat with the first refrigerant flowing inside the intake air cooler 716.

The first refrigerant discharged from the fuel cell stack 2a and the intake air cooler 716 flows into the control valve 715. The control valve 715 is configured by, for example, a three-way valve. The control valve 715 controls the flow direction and the flow rate of the first refrigerant flowing into the control valve 715 according to the opening degree of the control valve 715. For example, in a case where the opening degree of the control valve 715 is 100%, all of the first refrigerant flowing into the control valve 715 is supplied to the first heat exchanger 713. In a case where the opening degree of the control valve 715 is 50%, the first refrigerant flowing into the control valve 715 is supplied to the first heat exchanger 713 and the first bypass flow path 711a (the ion exchanger 714) half-and-half. In a case where the opening degree of the control valve 715 is 0%, all of the first refrigerant flowing into the control valve 715 is supplied to the first bypass flow path 711a (the ion exchanger 714).

The first heat exchanger 713 cools the first refrigerant by causing heat exchange between air (wind) hitting the first heat exchanger 713 and the first refrigerant flowing inside the first heat exchanger 713. In the present embodiment, the first heat exchanger 713 is a so-called radiator. The air hitting the first heat exchanger 713 is blown by a first radiator fan 713a. The first radiator fan 713a is configured by an electric fan, and is driven by power supplied from the control device 5.

Note that a first reserve tank 713b is connected to the first heat exchanger 713. The first reserve tank 713b is connected to the first refrigerant circulation path 711 in addition to the first heat exchanger 713. More specifically, the first reserve tank 713b is connected to the flow path between the first heat exchanger 713 and the first refrigerant pump 712. In addition, the first reserve tank 713b is connected to the flow path between the fuel cell stack 2a and the control valve 715. The first reserve tank 713b is configured by, for example, a sealed (pressurized) reserve tank, and the first refrigerant in the first refrigerant circulation path 711 circulates through the first reserve tank 713b.

The ion exchanger 714 includes an ion exchange filter and the like. When the first refrigerant flows inside the ion exchanger 714, impurity ions are removed from the first refrigerant. The impurity ions are eluted into the first refrigerant from, for example, a pipe or the like included in the first refrigerant circulation path 711. When the amount of impurity ions eluted into the first refrigerant increases, the conductivity of the first refrigerant increases. When the amount of impurity ions decreases, the conductivity of the first refrigerant decreases. The ion exchanger 714 can decrease the conductivity of the first refrigerant by removing the impurity ions from the first refrigerant.

### (1-2-2. Second cooling system)

The second cooling system 72 includes a second refrigerant circulation path 721, a second refrigerant pump 722, the oil cooler (oil cooler) 723, a second heat exchanger 724, and a plurality of second temperature sensors TS2. Note that the oil cooler 723 and a part of the second temperature sensors TS2 are included in the fuel cell module 2.

The second refrigerant circulation path 721 is a flow path for circulating a second refrigerant. In the present embodiment, cooling water is used as the second refrigerant, but the second refrigerant is not limited thereto. For example, cooling oil may be used as the second refrigerant, or cooling gas may be used.

The second refrigerant circulation path 721 is connected to the second refrigerant pump 722, the oil cooler 723, and the second heat exchanger 724. More specifically, the second refrigerant pump 722, the oil cooler 723, and the second heat exchanger 724 are connected in series.

The second temperature sensors TS2 are provided in a flow path between the second heat exchanger 724 and the oil cooler 723 and a flow path between the oil cooler 723 and the second refrigerant pump 722. The second temperature sensors TS2 detect the temperature of the second refrigerant circulating in the second refrigerant circulation path 721.

The second refrigerant pump 722 is configured by an electric pump, and is driven by power supplied from the control device 5. When the second refrigerant pump 722 is driven, the second refrigerant circulates in the second refrigerant circulation path 721. More specifically, the second refrigerant discharged from the second refrigerant pump 722 flows into the oil cooler 723 through the second heat exchanger 724.

The oil cooler 723 cools cooling oil for cooling the compressor 2c (particularly, a motor portion of the compressor 2c) and the like included in the fuel cell module 2. Specifically, the cooling oil flowing through the compressor 2c and the like flows into the oil cooler 723. The cooling oil flowing into the oil cooler 723 is cooled by heat exchange with the second refrigerant flowing inside the oil cooler 723 (separately from the cooling oil).

The second heat exchanger 724 cools the second refrigerant by causing heat exchange between air (wind) hitting the second heat exchanger 724 and the second refrigerant flowing inside the second heat exchanger 724. The second heat exchanger 724 is a so-called radiator. The air hitting the second heat exchanger 724 is blown by a second radiator fan 724a. The second radiator fan 724a is configured by an electric fan, and is driven by power supplied from the control device 5.

Note that a second reserve tank 724b is connected to the second heat exchanger 724. The second reserve tank 724b is configured by, for example, an open reserve tank, and stores the second refrigerant. When the second refrigerant circulating in the second refrigerant circulation path 721 runs short, the second refrigerant is replenished from the second reserve tank 724b.

### [1-3. Outline of configuration of housing]

Next, an outline of a configuration of the housing 10 included in the fuel cell system 1 will be described.

As illustrated in Figs. 1A and 1B, the housing 10 includes a lower frame 11. The lower frame 11 has a rectangular frame shape whose longitudinal direction is the left-right direction, and constitutes a base portion of the housing 10. Note that, although not illustrated, a plurality of reinforcing frames extending in the front-rear direction and bridging a front portion and a rear portion of the lower frame 11 is attached to the lower frame 11. The plurality of reinforcing frames is disposed at intervals in the left-right direction.

The housing 10 includes four pillars 12. The four pillars 12 include a left front pillar 12a, a right front pillar 12b, a left rear pillar 12c, and a right rear pillar 12d. Each of the pillars 12 extends in the vertical direction, and specifically, extends upward from one of the four corners of the lower frame 11. The four pillars 12 support an upper surface cover 13 constituting an upper surface portion of the housing 10.

The housing 10 includes a pair of front doors 14 having a rectangular shape in a front view on a front side surface. The pair of front doors 14 is disposed symmetrically with respect to a front side surface partition frame 15 that is disposed at the center of the front side surface of the housing 10 in the left-right direction and extends vertically. Of the pair of front doors 14, a left front door 14a disposed on the left side has a left end portion rotatably attached to the left front pillar 12a. When a right end portion of the left front door 14a is pulled forward from a closed state (corresponding to the state illustrated in Fig. 1A) in which the inside of the housing 10 is covered, the left front door 14a rotates about the rotation center on the left end portion side, and enters an open state in which the inside of the housing 10 is opened. Of the pair of front doors 14, a right front door 14b disposed on the right side has a right end portion rotatably attached to the right front pillar 12b. When a left end portion of the right front door 14b is pulled forward from the closed state (corresponding to the state illustrated in Fig. 1A), the right front door 14b rotates about the rotation center on the right end portion side, and enters the open state.

In addition to the pair of front doors 14, a pair of front side surface upper covers 16 disposed above the pair of front doors 14 and a front side surface lower cover 17 disposed below the pair of front doors 14 are provided on the front side surface of the housing 10.

Each of the pair of front side surface upper covers 16 has a rectangular shape in a front view. The pair of front side surface upper covers 16 is disposed symmetrically with respect to the front side surface partition frame 15. Of the pair of front side surface upper covers 16, a front side surface upper left cover 16a disposed on the left side has a rectangular front surface opening portion 161 on the lower right side. Of the pair of front side surface upper covers 16, a front side surface upper right cover 16b disposed on the right side has a rectangular front surface opening portion 161 on the lower left side. A ventilation cover 162 configured by a grid-like frame and having air permeability is attached to each of the front surface opening portions 161 for the purpose of preventing intrusion of foreign matter.

The front side surface lower cover 17 is disposed below the front doors 14 and supported by the lower frame 11. The front side surface lower cover 17 has a rectangular plate shape elongated in the left-right direction in a front view. The front side surface lower cover 17 is provided with a plurality of slits 171 penetrating in the front-rear direction and extending in the vertical direction (see Fig. 4A described later). The plurality of slits 171 is disposed at intervals in the left-right direction.

The housing 10 includes a pair of rear doors 18 having a rectangular shape in a rear view on a rear side surface. The pair of rear doors 18 is disposed symmetrically with respect to a rear side surface partition frame 19 that is disposed at the center of the rear side surface of the housing 10 in the left-right direction and extends vertically. Of the pair of rear doors 18, a left rear door 18a disposed on the left side has a left end portion rotatably attached to the left rear pillar 12c. When a right end portion of the left rear door 18a is pulled rearward from a closed state (corresponding to the state illustrated in Fig. 1B) in which the inside of the housing 10 is covered, the left rear door 18a rotates about the rotation center on the left end portion side, and enters an open state in which the inside of the housing 10 is opened. Of the pair of rear doors 18, a right rear door 18b disposed on the right side has a right end portion rotatably attached to the right rear pillar 12d. When a left end portion of the right rear door 18b is pulled rearward from the closed state (corresponding to the state illustrated in Fig. 1B), the right rear door 18b rotates about the rotation center on the right end portion side, and enters the open state.

In addition to the pair of rear doors 18, a pair of rear side surface upper covers 20 disposed above the pair of rear doors 18 and a rear side surface lower cover 21 disposed below the pair of rear doors 18 are provided on the rear side surface of the housing 10.

Each of the pair of rear side surface upper covers 20 has a rectangular shape in a rear view. The pair of rear side surface upper covers 20 is disposed symmetrically with respect to the rear side surface partition frame 19. Of the pair of rear side surface upper covers 20, a rear side surface upper left cover 20a disposed on the left side has a rectangular rear surface opening portion 201 on the lower right side. Of the pair of rear side surface upper covers 20, a rear side surface upper right cover 20b disposed on the right side has a rectangular rear surface opening portion 201 on the lower left side. A ventilation cover 202 configured by a grid-like frame and having air permeability is attached to each of the rear surface opening portions 201 for the purpose of preventing intrusion of foreign matter.

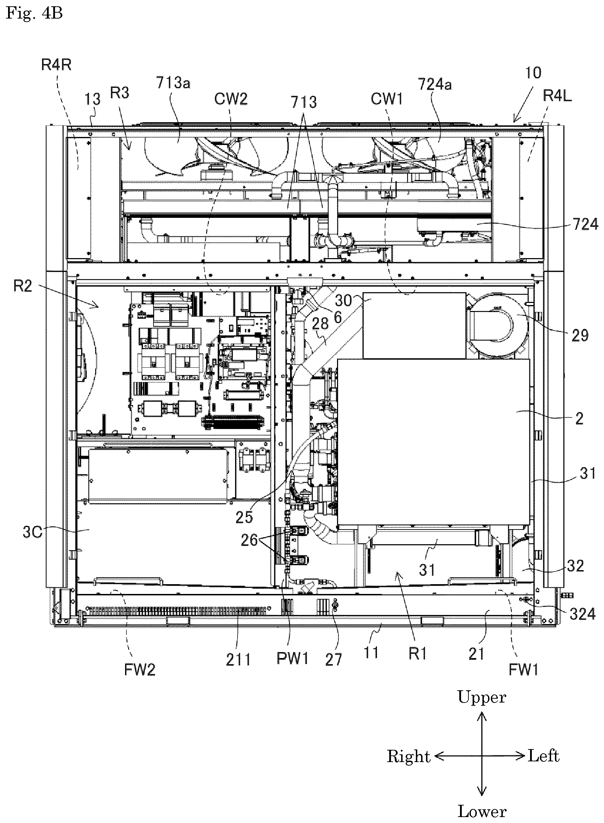

The rear side surface lower cover 21 is disposed below the rear doors 18 and supported by the lower frame 11. The rear side surface lower cover 21 has a rectangular shape elongated in the left-right direction in a rear view. The rear side surface lower cover 21 is provided with a plurality of slits 211 penetrating in the front-rear direction and extending in the vertical direction (see Fig. 4B described later). The plurality of slits 211 is disposed at intervals in the left-right direction.

The housing 10 further includes a left side surface cover 22 disposed on a left side surface and a right side surface cover 23 disposed on a right side surface. The left side surface cover 22 is supported by the left front pillar 12a and the left rear pillar 12c. The right side surface cover 23 is supported by the right front pillar 12b and the right rear pillar 12d. Note that, as illustrated in Fig. 1B, the left side surface cover 22 is provided with a plurality of left side surface openings 221 penetrating in the left-right direction and extending in the front-rear direction. The plurality of left side surface openings 221 is disposed at intervals in the vertical direction.

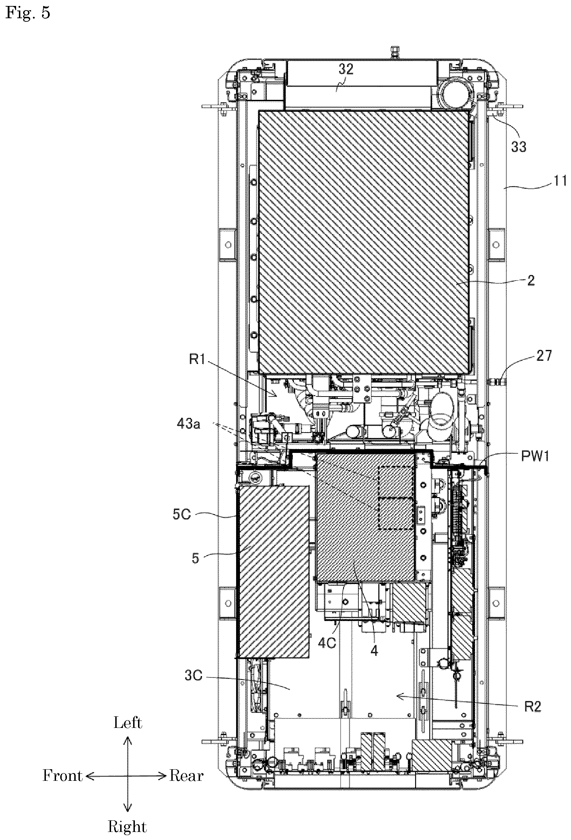

Fig. 4A is a front view illustrating a schematic configuration of the inside of the housing 10. Fig. 4B is a rear view illustrating the schematic configuration of the inside of the housing 10. Figs. 4A and 4B are views illustrating a case where the pair of front doors 14, the front side surface partition frame 15, the pair of front side surface upper covers 16, the pair of rear doors 18, the rear side surface partition frame 19, and the pair of rear side surface upper covers 20 are removed from the housing 10 illustrated in Figs. 1A and 1B. Fig. 5 is a diagram illustrating a schematic configuration of a cross section in a case where the housing 10 illustrated in Fig. 4A is cut at a V-V position.

As illustrated in Figs. 4A, 4B, and 5, the housing 10 includes a fuel cell room R1, an electrical equipment room R2, and a radiator room R3. The fuel cell room R1 and the electrical equipment room R2 are disposed side by side in the left-right direction. Specifically, the fuel cell room R1 is disposed on the left side of the housing 10, and the electrical equipment room R2 is disposed on the right side of the housing 10. The electrical equipment room R2 is partitioned from the fuel cell room R1. Specifically, the fuel cell room R1 and the electrical equipment room R2 are partitioned by a first partition wall PW1 disposed between the fuel cell room R1 and the electrical equipment room R2 in the left-right direction. The radiator room R3 is disposed above the fuel cell room R1 and the electrical equipment room R2 is disposed side by side in the left-right direction. That is, the housing 10 includes the radiator room R3 above the fuel cell room R1 and the electrical equipment room R2. The radiator room R3 is partitioned from the fuel cell room R1 and the electrical equipment room R2.

The fuel cell room R1 is a rectangular parallelepiped space. The fuel cell room R1 is a space surrounded by a first floor wall FW1, a first ceiling wall CW1, the first partition wall PW1, the left side surface cover 22 (see Fig. 1B), and the left front door 14a (see Fig. 1A) and the left rear door 18a (see Fig. 1B) in the closed state. Note that the first floor wall FW1 constitutes a floor surface of the fuel cell room R1. The first ceiling wall CW1 constitutes a ceiling surface of the fuel cell room R1.

The fuel cell module 2 is disposed in the fuel cell room R1. The fuel cell module 2 is supported by the first floor wall FW1. Furthermore, in the fuel cell room R1, a hydrogen supply system, an air supply system, and an exhaust system (specifically, a part of the exhaust system) are disposed.

The hydrogen supply system includes a hydrogen supply pipe 25 and a shutoff valve 26. The hydrogen supply pipe 25 constitutes a hydrogen supply path from a hydrogen adapter 27 (see Fig. 4B and the like) to the fuel cell stack 2a (see Fig. 2). Note that the hydrogen adapter 27 protrudes rearward from the rear side surface lower cover 21 and is connected to an external pipe (not illustrated) for supplying hydrogen, which is disposed outside the housing 10. The shutoff valve 26 is provided at an intermediate position of the hydrogen supply path, and can shut off the supply of hydrogen from the outside. Note that the hydrogen adapter 27 may protrude leftward from a left side surface lower cover 22U (see Fig. 1B). The left side surface lower cover 22U is a side surface cover disposed below the left side surface cover 22.

The air supply system includes an air supply pipe 28, an air cleaner 29, and an air filter 30. The air supply pipe 28 constitutes an air supply path from the left side surface openings 221 provided in the left side surface cover 22 to the compressor 2c (see Fig. 2). The air cleaner 29 and the air filter 30 are provided at intermediate positions of the air supply path, and purify air taken in from the outside of the housing 10.

The exhaust system constitutes an exhaust gas path from the fuel cell stack 2a (see Fig. 2) to an exhaust gas outlet 131 (see Fig. 1A and the like) provided in the upper surface cover 13. Hereinafter, the exhaust system (exhaust gas path) is also referred to as an exhaust path ER. In the exhaust path ER, an exhaust introduction pipe 31, a silencer 32, and the like are disposed. Note that details of the exhaust path ER will be described later. Exhaust gas discharged from the fuel cell stack 2a is discharged from the exhaust gas outlet 131 through the exhaust path ER.

In addition, in the fuel cell room R1, a part of the components of the first cooling system 71 and the second cooling system 72 described above is disposed. Furthermore, as illustrated in Fig. 4B, in the fuel cell room R1, the gas detector 6 described above is disposed at an upper portion close to the first ceiling wall CW1. More specifically, the gas detector 6 is disposed above the position where the hydrogen supply pipe 25 is provided. Providing the gas detector 6 at such a position makes it possible to quickly detect occurrence of leakage of hydrogen gas, which has a small mass and easily rises. Therefore, it is possible to quickly execute emergency stop or the like of the system when leakage of hydrogen gas occurs.

The electrical equipment room R2 is a rectangular parallelepiped space. The electrical equipment room R2 is a space surrounded by a second floor wall FW2, a second ceiling wall CW2, the first partition wall PW1, the right side surface cover 23 (see Fig. 1A), and the right front door 14b (see Fig. 1A) and the right rear door 18b (see Fig. 1B) in the closed state. Note that the second floor wall FW2 constitutes a floor surface of the electrical equipment room R2. The second ceiling wall CW2 constitutes a ceiling surface of the electrical equipment room R2.

A plurality of electric devices is disposed in the electrical equipment room R2. The plurality of electric devices includes, for example, the battery 3 and the inverter 4 electrically connected to the fuel cell module 2. Note that the battery 3 is disposed in the electrical equipment room R2 in a state of being accommodated in a battery case 3C. Specifically, the battery 3 accommodated in the battery case 3C includes plurality of batteries. Furthermore, the inverter 4 is disposed in the electrical equipment room R2 in a state of being accommodated in an inverter case 4C. Note that, in the electrical equipment room R2, a plurality of electric devices is collectively disposed, and a large number of electric components other than the battery 3 and the inverter 4 are also disposed. For example, in the electrical equipment room R2, the control device 5 (see Fig. 2) is disposed in a state of being accommodated in a controller case 5C. In addition, in the electrical equipment room R2, a relay, a breaker, a converter, and the like are disposed.

The radiator room R3 is a rectangular parallelepiped space extending in the left-right direction. The radiator room R3 is provided between the upper surface cover 13 and each of the first ceiling wall CW1 and the second ceiling wall CW2. In other words, the housing 10 includes the radiator room R3 above the first ceiling wall CW1 included in the fuel cell room R1. Furthermore, the housing 10 includes the radiator room R3 above the second ceiling wall CW2 included in the electrical equipment room R2.

The radiator room R3 accommodates radiators that cool the fuel cell module 2. Note that, in the present embodiment, the radiators are the first heat exchanger 713 and the second heat exchanger 724 described above. Specifically, two first heat exchangers 713 are disposed in the radiator room R3. The two first heat exchangers 713 are disposed side by side in the left-right direction. In the present embodiment, the two first heat exchangers 713 are disposed in parallel in the first cooling system 71, but may be disposed in series. On the other hand, the number of the second heat exchanger 724 disposed in the radiator room R3 is one. The second heat exchanger 724 is disposed below one of the two first heat exchangers 713 disposed side by side. Specifically, the second heat exchanger 724 is disposed below the first heat exchanger 713 disposed on the left side in the two first heat exchangers 713. Note that the number and disposition of the first heat exchangers 713 and the second heat exchanger 724 may be appropriately changed.

Among the components of the first cooling system 71 and the second cooling system 72 described above, at least a part of the components not disposed in the fuel cell room R1 is disposed in the radiator room R3. In addition to the first heat exchangers 713 and the second heat exchanger 724, for example, the first radiator fan 713a and the second radiator fan 724a described above are disposed in the radiator room R3. The first radiator fan 713a is disposed above the first heat exchanger 713 disposed on the right side. The second radiator fan 724a is disposed above the first heat exchanger 713 disposed on the left side. With such a configuration, the second radiator fan 724a, which is provided for blowing air to the second heat exchanger 724, is also used, specifically, for blowing air to the first heat exchanger 713 disposed on the left side.

Note that the upper surface cover 13 disposed above the first radiator fan 713a and the second radiator fan 724a is provided with fan opening portions 132 at positions vertically opposed to the radiator fans 713a and 724a (see Fig. 1A and the like). In addition, for the purpose of preventing intrusion of foreign matter, a ventilation cover 133 configured by a radial frame and having air permeability is attached to each of the fan opening portions 132.

A ceiling wall opening portion (not illustrated) is formed in the first ceiling wall CW1 of the fuel cell room R1, and a fuel cell room ventilation fan (not illustrated) is disposed in the ceiling wall opening portion. When the fuel cell room ventilation fan is driven, air outside the housing 10 enters the fuel cell room R1 through the plurality of slits 171 in the lower portion of the housing 10, and flows from the lower side to the upper side inside the fuel cell room R1. The air then passes through the fuel cell room ventilation fan, and enters a left duct room R4L provided adjacent to the left of the radiator room R3. The air that has entered the left duct room R4L rises in the left duct room R4L, and is discharged to the outside of the housing 10 via an upper surface left opening portion 134 (see Fig. 1A and the like) provided in the upper surface cover 13. The air flow described above ventilates the inside of the fuel cell room R1.

An inverter ventilation fan 43a (see Fig. 5) is provided in the electrical equipment room R2. The inverter ventilation fan 43a is disposed in an opening portion provided in a lower surface of the inverter case 4C. When the inverter ventilation fan 43a is driven, air outside the housing 10 enters the inverter case 4C through the plurality of slits 171 in the lower portion of the housing 10, and flows from the lower side to the upper side inside the inverter case 4C. The air then merges with air discharged from the inside of the battery case 3C described later, and then enters a right duct room R4R provided adjacent to the right of the radiator room R3. The air that has entered the right duct room R4R rises in the right duct room R4R, and is discharged to the outside of the housing 10 via an upper surface right opening portion 135 (see Fig. 1A and the like) provided in the upper surface cover 13. The air flow described above ventilates the inside of the inverter case 4C and cools (cools by air) the inverter 4.

In the electrical equipment room R2, battery ventilation fans 43b (see Fig. 4A) are further provided. The battery ventilation fans 43b are disposed in opening portions of the battery case 3C on the downstream side of the battery 3. In the present embodiment, eight battery ventilation fans 43b are provided, but the number is not particularly limited. Note that other ventilation fans may be disposed in the electrical equipment room R2 as necessary.

When the battery ventilation fans 43b are driven, air outside the housing 10 enters the battery case 3C through the plurality of slits 171 and 211 in the lower portion of the housing 10, and flows from the rear to the front inside the battery case 3C. The air then merges with the air discharged from the inside of the inverter case 4C, enters the right duct room R4R, and is discharged to the outside of the housing 10 via the upper surface right opening portion 135. The air flow described above ventilates the inside of the battery case 3C and cools (cools by air) the battery 3.

### <2. Details of exhaust path>

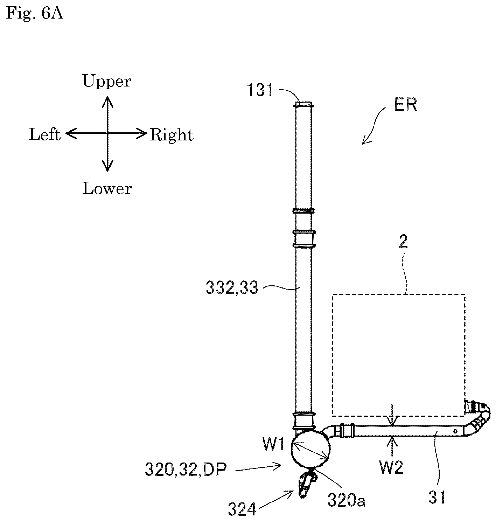

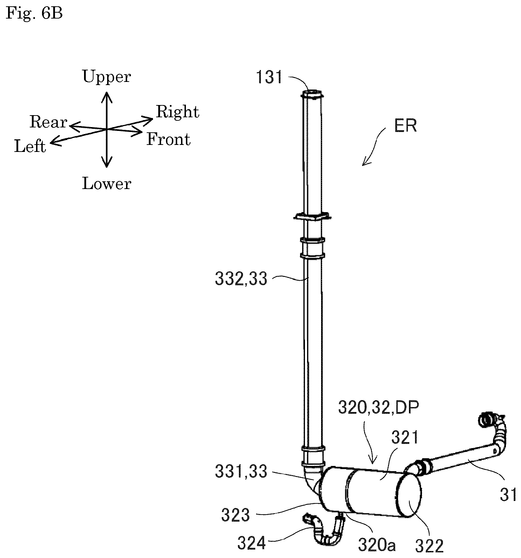

Next, details of the exhaust path ER described above will be described. Fig. 6A is a front view of the exhaust path ER as viewed from the front. Fig. 6B is a perspective view of the exhaust path ER. The exhaust introduction pipe 31, the silencer 32, and a discharge pipe 33 are disposed in the exhaust path ER connected to the fuel cell module 2.

The exhaust introduction pipe 31 is a pipe for introducing exhaust fluid discharged from the fuel cell module 2 into the silencer 32. Here, the exhaust fluid includes air (exhaust gas) having a low oxygen concentration after oxygen is consumed in the fuel cell stack 2a of the fuel cell module 2. The exhaust fluid also includes water generated by reaction between oxygen and hydrogen in the fuel cell stack 2a. The exhaust introduction pipe 31 may be configured by a single pipe or may be configured by connecting a plurality of pipes via a flange.

The silencer 32 is a silencer for suppressing exhaust noise. The silencer 32 includes a main body case 320. The main body case 320 includes a cylindrical portion 321 that is a cylindrical pipe, a front wall portion 322, and a rear wall portion 323. The cylindrical portion 321 is disposed such that the central axis is along the front-rear direction. The front wall portion 322 is disposed on one side (front side) in a central axis direction (front-rear direction) of the cylindrical portion 321 and is connected to the cylindrical portion 321. The rear wall portion 323 is disposed on the other side (rear side) in the central axis direction of the cylindrical portion 321 and is connected to the cylindrical portion 321. As a result, the inside of the silencer 32 is formed as a closed space. Note that the disposition of the silencer 32 in which the central axis of the cylindrical portion 321 is along the front-rear direction is an example, and the disposition is not limited to this. Details of an internal configuration of the silencer 32 will be described later.

The exhaust introduction pipe 31 is provided to penetrate the cylindrical portion 321 of the main body case 320. Note that the exhaust introduction pipe 31 may be provided to penetrate the front wall portion 322. Furthermore, instead of penetrating the cylindrical portion 321 or the like, the exhaust introduction pipe 31 may be connected to an opening provided in the cylindrical portion 321 or the like by welding or the like.

The discharge pipe 33 is provided to penetrate the rear wall portion 323 of the main body case 320. Note that the discharge pipe 33 may be provided to penetrate the cylindrical portion 321 of the main body case 320. Furthermore, instead of penetrating the rear wall portion 323 or the like, the discharge pipe 33 may be connected to an opening provided in the rear wall portion 323 or the like by welding or the like.

The discharge pipe 33 has the exhaust gas outlet 131 described above. The exhaust gas outlet 131 is located at an end portion of the discharge pipe 33 on the side opposite to the connection side with the main body case 320. As described above, the fuel cell system 1 of the present embodiment includes the discharge pipe 33 connected to the main body case 320.

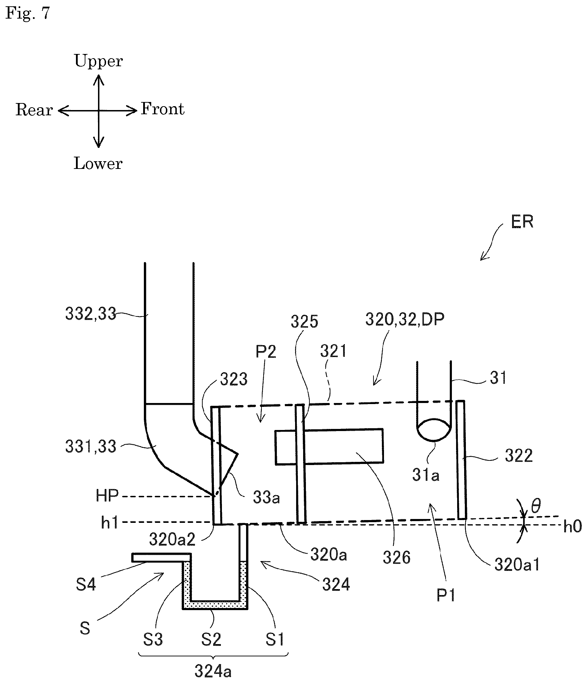

The discharge pipe 33 includes an inclined pipe 331 and a connection pipe 332. The inclined pipe 331 extends obliquely upward from the main body case 320. More specifically, as also illustrated in Fig. 7, the inclined pipe 331 is formed in a curved shape that extends obliquely upward from the rear wall portion 323 of the main body case 320 and then changes its direction to extend upward. The connection pipe 332 is connected to an upper end of the inclined pipe 331 and extends upward. The inclined pipe 331 and the connection pipe 332 are connected via a flange. Note that the discharge pipe 33 may be configured by a single pipe in which the inclined pipe 331 and the connection pipe 332 are integrated.

In the above configuration, exhaust gas contained in exhaust fluid guided from the fuel cell module 2 to the inside of the silencer 32 through the exhaust introduction pipe 31 passes through the inclined pipe 331 and the connection pipe 332 of the discharge pipe 33 in this order, and is discharged from the exhaust gas outlet 131 to the upper side of the housing 10 (see Fig. 1A and the like). From the above, it can be said that the silencer 32 is disposed in the middle of the exhaust path ER directed from the fuel cell module 2 toward the exhaust gas outlet 131.

The silencer 32 is provided with a drain pipe 324. Specifically, the drain pipe 324 is connected to a bottom portion 320a of the main body case 320 of the silencer 32. With this structure, the inside of the main body case 320 and the drain pipe 324 communicate with each other. Note that the bottom portion 320a refers to a portion located at a lowermost portion of the main body case 320, but does not need to be strictly at the lowermost portion, and may be located at a position shifted from the lowermost portion in the left-right direction.

Moisture contained in the exhaust fluid guided into the silencer 32 is accumulated on the bottom portion 320a of the main body case 320 due to gravity, and travels along the bottom portion 320a toward the drain pipe 324. The moisture is then discharged from the drain pipe 324 to the outside of the housing 10. Hereinafter, the moisture contained in the exhaust fluid is also referred to as drain water. For example, as illustrated in Fig. 4B, an outlet-side portion of the drain pipe 324 extends rearward from a left end portion of the rear side surface lower cover 21. Therefore, the drain water is discharged from the drain pipe 324 to the rear of the housing 10.

As in the present embodiment, connecting the drain pipe 324 to the main body case 320 of the silencer 32 enables the silencer 32 including the drain pipe 324 to function as a drain portion DP for draining the drain water contained in the exhaust fluid. For this reason, it can be said that the silencer 32 constitutes the drain portion DP. In other words, it can be said that the silencer 32 includes the drain portion DP. Furthermore, as described above, since the silencer 32 is disposed in the middle of the exhaust path ER, it can be said that the silencer 32 (the drain portion DP) including the drain pipe 324 is disposed to be branched from the exhaust path ER.

As described above, the fuel cell system 1 of the present embodiment includes the drain portion DP disposed to be branched from the exhaust path ER of the fuel cell module 2. As a result, moisture (drain water) contained in exhaust fluid discharged from the fuel cell module 2 can be discharged from the drain portion DP (particularly, the drain pipe 324), and exhaust gas having a low oxygen concentration can be discharged to the outside of the housing 10 through the exhaust path ER as it is. As described above, since the drain water and the exhaust gas can be separately discharged, it is possible to reduce a risk that the drain water is discharged from the exhaust path ER together with the exhaust gas and scattered around.

In the present embodiment, the silencer 32 as a silencer is disposed in the middle of the exhaust path ER. As a result, the exhaust sound of the exhaust fluid discharged from the fuel cell module 2 (sound generated when the exhaust fluid flows) is absorbed by the silencer 32, and the exhaust sound is reduced.

In particular, in the present embodiment, the silencer 32 includes the drain portion DP, and one silencer 32 has both the function of draining the drain water and the function of silencing the exhaust fluid. As a result, for example, as compared with a configuration in which an air-water separation structure such as a mist separator is provided in the exhaust path ER separately from the silencer 32, it is not necessary to make the exhaust path ER long, which avoids complication of the exhaust path ER. Therefore, in the configuration in which the silencer 32 includes the drain portion DP, it is easy to compactly install the drain portion DP (the silencer 32) having the silencing function and the drain function in a limited space in the fuel cell system 1 (in the housing 10).

In the present embodiment, the main body case 320 (in particular, the cylindrical portion 321) of the silencer 32 (the drain portion DP) is configured by a pipe (enlarged diameter portion) having an outer diameter larger than that of the exhaust introduction pipe 31 for guiding the exhaust fluid to the main body case 320. More specifically, as illustrated in Fig. 6A, a diameter W1 (mm) of the main body case 320 is larger than a diameter W2 (mm) of the exhaust introduction pipe 31.

In this configuration, the diameter of the flow path for exhaust fluid in the silencer 32 (corresponding to the inner diameter of the main body case 320) can be easily made larger than the diameter of the flow path for exhaust fluid in the exhaust introduction pipe 31 (corresponding to the inner diameter of the exhaust introduction pipe 31). Since the diameter of the flow path is increased by the silencer 32, the flow velocity of the exhaust fluid flowing through the exhaust introduction pipe 31 and flowing into the silencer 32 (the main body case 320) can be easily reduced in the main body case 320. As a result, the exhaust sound is reliably reduced in the silencer 32.

The drain pipe 324 is connected to the bottom portion 320a of the main body case 320. With this structure, water accumulated on the bottom portion 320a in the main body case 320 is easily drained downward by the drain pipe 324 and discharged to the outside.

The discharge pipe 33 includes the inclined pipe 331, and thus, even if the drain water enters the inside of the discharge pipe 33 from the main body case 320 side together with the exhaust gas, the drain water falls obliquely downward, that is, toward the main body case 320 side due to gravity. In addition, even if the drain water enters the inside of the discharge pipe 33 in a gaseous state (that is, in a water vapor state), the water vapor eventually condenses in the discharge pipe 33 and falls obliquely downward as a water droplet. Therefore, the drain water and the water vapor thereof are more effectively prevented from rising in the discharge pipe 33 together with the exhaust gas and being discharged to the outside of the housing 10.

In addition, the discharge pipe 33 includes the connection pipe 332, and thus the exhaust gas having a low oxygen concentration can be discharged to the upper side of the housing 10 via the connection pipe 332. As a result, even in a case where a person is present around (on the side of) the housing 10, a risk that the exhaust gas having a low oxygen concentration adversely affects the human body is reduced, which improves the safety.

Gravity (downward force) acts on the water contained in the exhaust fluid discharged from the fuel cell module 2. From the viewpoint of easily guiding the exhaust fluid from the fuel cell module 2 to the silencer 32 and discharging the drain water contained in the exhaust fluid from the drain pipe 324 without resisting gravity, the silencer 32, that is, the drain portion DP is desirably disposed below the fuel cell module 2 as illustrated in Fig. 6A.

### <3. Internal configuration of silencer>

### [3-1. Exhaust inlet and exhaust outlet]

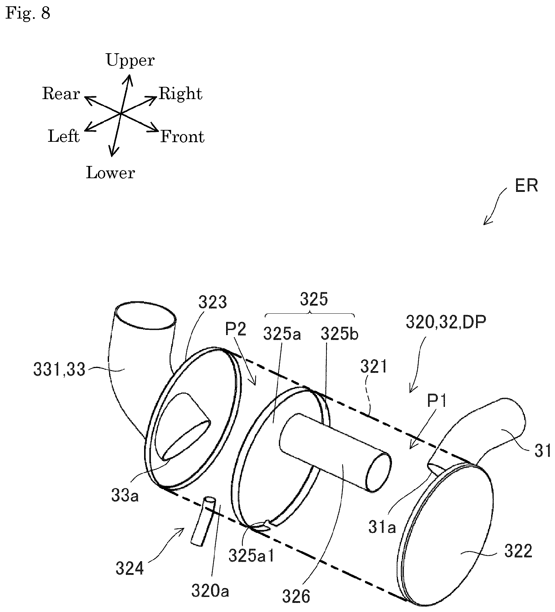

Fig. 7 is a side view illustrating the internal configuration of the silencer 32. Fig. 8 is a perspective view illustrating the internal configuration of the silencer 32. Note that, in Figs. 7 and 8, the cylindrical portion 321 of the main body case 320 of the silencer 32 is indicated by an imaginary line (two-dot chain line) for the sake of convenience.

The main body case 320 of the silencer 32 is provided with an exhaust inlet 31a and an exhaust outlet 33a. The exhaust inlet 31a is a portion that serves as an inlet to the main body case 320 for exhaust fluid discharged from the fuel cell module 2. In the present embodiment, the exhaust introduction pipe 31 is disposed to penetrate the cylindrical portion 321 of the main body case 320. Therefore, one end portion of the exhaust introduction pipe 31 located inside the main body case 320 constitutes the exhaust inlet 31a. Note that the one end portion (the exhaust inlet 31a) is also an end portion of the exhaust introduction pipe 31 on the side opposite to the connection side with the fuel cell module 2.

The exhaust outlet 33a is a portion that serves as an outlet from the main body case 320 for exhaust gas contained in the exhaust fluid. In the present embodiment, the discharge pipe 33 is disposed to penetrate the rear wall portion 323 of the main body case 320. Therefore, one end portion of the discharge pipe 33 located inside the main body case 320 constitutes the exhaust outlet 33a. Note that the one end portion (the exhaust outlet 33a) is also an end portion of the discharge pipe 33 on the side opposite to the exhaust gas outlet 131. As illustrated in Fig. 7, the exhaust outlet 33a is located behind the exhaust inlet 31a in the front-rear direction.

Of the exhaust fluid flowing into the main body case 320 through the exhaust inlet 31a, drain water is discharged from the drain pipe 324, and the exhaust gas is discharged from the exhaust outlet 33a. As described above, the drain pipe 324, the exhaust inlet 31a, and the exhaust outlet 33a are separately provided in the main body case 320, and thus the silencer 32 that separates and discharges the drain water and the exhaust gas is reliably implemented.

### [3-2. Partition wall, internal pipe, and inclined disposition of main body case]

As illustrated in Figs. 7 and 8, the silencer 32 further includes a partition wall 325 and an internal pipe 326. The partition wall 325 is a partition wall that partitions the inside of the main body case 320 (particularly, the cylindrical portion 321) between the exhaust inlet 31a side and the exhaust outlet 33a side. The partition wall 325 is disposed slightly behind the center of the cylindrical portion 321 in the front-rear direction. Note that the disposition of the partition wall 325 in the front-rear direction may be appropriately set. The partition wall 325 separates the inside of the main body case 320 into a plurality of sections including a first section P1 on the exhaust inlet 31a side and a second section P2 on the exhaust outlet 33a side. In addition, the drain pipe 324 described above is connected to the bottom portion 320a of the main body case 320 on the side closer to a second end portion 320a2 described later than the partition wall 325.

The partition wall 325 includes a disk portion 325a and an edge portion 325b. The disk portion 325a expands in a radial direction perpendicular to the central axis direction (front-rear direction) of the cylindrical portion 321. The edge portion 325b is connected to an outer peripheral portion of the disk portion 325a and extends forward. The edge portion 325b is fixed to an inner surface of the cylindrical portion 321 by welding or the like. As a result, the partition wall 325 is fixed to the main body case 320.

The disk portion 325a is provided with an opening 325a1 (see Fig. 8). The opening 325a1 is formed by a cutout obtained by cutting out a part of the outer peripheral portion of the disk portion 325a, and the cutout portion is closed by the bottom portion 320a of the main body case 320. That is, the partition wall 325 has the opening 325a1 in a lower portion. Note that the opening 325a1 may be a hole whose entire circumference is closed.

The internal pipe 326 is provided to penetrate the partition wall 325 (particularly, the disk portion 325a) in the front-rear direction. The internal pipe 326 allows the exhaust inlet 31a side and the exhaust outlet 33a side inside the main body case 320 to communicate with each other. The internal pipe 326 is provided perpendicular to the partition wall 325, but may be provided inclined relative to the partition wall 325. That is, the internal pipe 326 may be provided to obliquely penetrate the partition wall 325.

As illustrated in Fig. 7, the bottom portion 320a of the main body case 320 includes a first end portion 320a1 and the second end portion 320a2. In the bottom portion 320a, the first end portion 320a1 is located on the exhaust inlet 31a side relative to the partition wall 325. In the bottom portion 320a, the second end portion 320a2 is located on the exhaust outlet 33a side relative to the partition wall 325. The main body case 320 is disposed such that the bottom portion 320a is inclined by θ (°) relative to the horizontal plane. As a result, the second end portion 320a2 is located below the first end portion 320a1. Note that the inclination angle θ is, for example, 1°, but may be an angle other than 1°. In addition, the inclination angle θ may be zero. That is, the main body case 320 may be horizontally disposed.

The partition wall 325 and the internal pipe 326 are provided in the main body case 320, and thus the exhaust gas, which is contained in the exhaust fluid flowing into the main body case 320 (into the first section P1) from the exhaust inlet 31a, enters the second section P2 directly through the internal pipe 326 or through the internal pipe 326 after colliding with the partition wall 325, and is discharged to the outside through the exhaust outlet 33a.

On the other hand, the drain water contained in the exhaust fluid is accumulated by falling directly on the bottom portion 320a of the main body case 320 due to gravity, or is accumulated by falling on the bottom portion 320a after colliding with the partition wall 325 together with the exhaust gas. The water accumulated on the bottom portion 320a flows to the second end portion 320a2 side along the bottom portion 320a through the opening 325a1 and is discharged through the drain pipe 324.

As described above, it is desirable to provide the partition wall 325 and the internal pipe 326 in the silencer 32 in terms of allowing the drain water (in particular, drain water that has not directly fallen on the bottom portion 320a) contained in the exhaust fluid to be captured (trapped) and collected on the bottom portion 320a while discharging the exhaust gas contained in the exhaust fluid to the outside of the main body case 320. In addition, the inside of the main body case 320 is divided into a plurality of sections (for example, the first section P1 and the second section P2) by the partition wall 325. In this configuration, the exhaust fluid (particularly, the exhaust gas) advances from the first section P1 to the second section P2 through the internal pipe 326, whereby the exhaust fluid is expanded and decompressed. As a result, the silencer 32 reliably silences the exhaust sound.

In the configuration in which the partition wall 325 is provided in the main body case 320, in terms of allowing the drain water collected on the bottom portion 320a of the main body case 320 to flow along the bottom portion 320a and to be guided to the drain pipe 324, it is desirable to provide the opening 325a1 serving as a passage of the drain water in a lower portion of the partition wall 325.

In the configuration in which the main body case 320 is inclined as described above, the drain water retained on the bottom portion 320a in the main body case 320 is collected on the second end portion 320a2 side (the exhaust outlet 33a side). As a result, the drain water is efficiently discharged from the drain pipe 324. In addition, the drain water is prevented from being retained over a wide range of the bottom portion 320a of the main body case 320. Therefore, a risk that the drain water is not drained and remains in the main body case 320 for a long period of time is also reduced.

In terms of rapidly discharging the drain water collected on the second end portion 320a2 side of the bottom portion 320a from the drain pipe 324 by the inclined disposition of the main body case 320, it is desirable to dispose the drain pipe 324 as in the present embodiment. That is, the drain pipe 324 is desirably connected to the bottom portion 320a of the main body case 320 on the side closer to the second end portion 320a2 than the partition wall 325.

In the present embodiment, only one partition wall 325 is provided inside the main body case 320, but the present invention is not limited to this configuration. For example, a plurality of partition walls 325 may be provided inside the main body case 320 to separate the inside of the main body case 320 into three or more sections. In this case, a plurality of internal pipes 326 penetrating the partition walls 325 may be provided in the main body case 320 so as to correspond to the partition walls 325.

### [3-3. Height position of exhaust outlet]

In the present embodiment, in the main body case 320, the exhaust outlet 33a is disposed at the following height position. That is, as illustrated in Fig. 7, in the main body case 320, the exhaust outlet 33a is disposed at a position HP, which is higher than a retention height h1 of the drain water separated from the exhaust path ER.

Here, the retention height h1 of the drain water in the main body case 320 is a retention height of the drain water based on the second end portion 320a2 of the bottom portion 320a of the main body case 320. The retention height h1 is determined according to the inclination angle θ of the main body case 320 and the position of the drain pipe 324 connected to the bottom portion 320a in the front-rear direction. Furthermore, the position HP of the exhaust outlet 33a refers to the position of a lower end of the exhaust outlet 33a. The position HP of the exhaust outlet 33a may be freely set in consideration of the retention height h1 of the drain water.

In the main body case 320, the position HP of the exhaust outlet 33a is higher than the retention height h1 of the drain water, and thus the drain water retained on the bottom portion 320a of the main body case 320 is less likely to be transferred to the exhaust outlet 33a (is less likely to be raised to the exhaust outlet 33a) by the momentum of the exhaust gas flowing toward the exhaust outlet 33a in the main body case 320. As a result, the risk that the drain water retained on the bottom portion 320a passes through the discharge pipe 33 together with the exhaust gas and is scattered to the outside of the housing 10 is further reduced.

### [3-4. Water sealing structure of drain portion]

As illustrated in Fig. 7, the drain portion DP includes a water seal portion 324a in a part of a drain path S (the drain pipe 324). The drain path S is configured by connecting, for example, a first drain pipe S1, a second drain pipe S2, a third drain pipe S3, and a fourth drain pipe S4. The first drain pipe S1 is a pipe extending downward from the bottom portion 320a of the main body case 320. The second drain pipe S2 is a pipe extending rearward from a downstream end portion (lower end) of the first drain pipe S1. The third drain pipe S3 is a pipe extending upward from a downstream end portion (rear end) of the second drain pipe S2. The fourth drain pipe S4 is a pipe extending rearward from a downstream end portion (upper end) of the third drain pipe S3. An outlet-side portion of the fourth drain pipe S4 corresponds to the outlet-side portion of the drain pipe 324 illustrated in Fig. 4B.

The third drain pipe S3 is shorter than the first drain pipe S1. Therefore, when the position of the second drain pipe S2 is used as a reference, the height position of the fourth drain pipe S4 connected to the third drain pipe S3 is lower than an upper end of the first drain pipe S1 (a portion at which the first drain pipe S1 is connected to the bottom portion 320a).

The drain water flowing through the drain pipe 324 flows through the first drain pipe S1, the second drain pipe S2, the third drain pipe S3, and the fourth drain pipe S4 in this order, and is discharged to the outside of the housing 10 (see Fig. 4B and the like). At this time, the height position of the fourth drain pipe S4 is lower than the upper end of the first drain pipe S1, and thus the drain water is discharged through the fourth drain pipe S4 by an amount exceeding the height of the third drain pipe S3. The drain water that does not exceed the height of the third drain pipe S3 is stored as sealing water in the first drain pipe S1, the second drain pipe S2, and the third drain pipe S3. Therefore, the first drain pipe S1, the second drain pipe S2, and the third drain pipe S3 constitute the water seal portion 324a that stores the drain water separated from the exhaust path ER. In Fig. 7, a portion where the drain water is stored in the drain pipe 324 is indicated by hatching.

The exhaust gas contained in the exhaust fluid discharged from the fuel cell module 2 is air after oxygen consumption, and thus has a low oxygen concentration. For this reason, for example, when the exhaust gas is discharged to a side (for example, the rear side) of the housing 10 in a state of being mixed in the drain water, there is a concern about an influence on a human body in a case where a person is present around the housing 10. Therefore, from the viewpoint of safety, it is desirable that the exhaust gas is not mixed in the discharge path for the drain water discharged to a side of the housing 10. The drain portion DP (in particular, the drain pipe 324) includes the water seal portion 324a, and thus the drain water (sealing water) stored in the water seal portion 324a prevents entry of the exhaust gas from the inside of the main body case 320 into the drain pipe 324. This reduces a risk that the exhaust gas is mixed in the drain water and discharged from the drain pipe 324.

### [3-5. Positional relationship between exhaust outlet and internal pipe (labyrinth structure)]

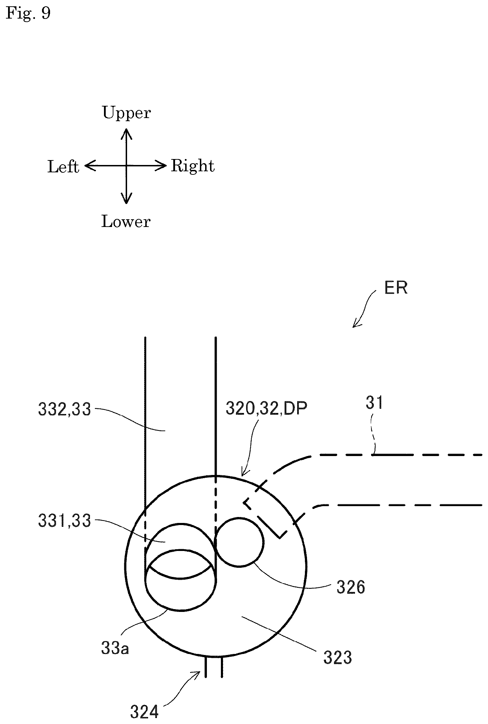

Fig. 9 is a front view schematically illustrating an internal configuration of the main body case 320 on the rear side of the partition wall 325 illustrated in Figs. 7 and 8. As illustrated in the drawing, in the main body case 320 of the silencer 32, the exhaust outlet 33a is located outside the internal pipe 326 as viewed in the central axis direction (for example, the front-rear direction) of the internal pipe 326. That is, the exhaust outlet 33a is located to be shifted from the internal pipe 326 in the radial direction of the internal pipe 326 as viewed in the central axis direction of the internal pipe 326. Such a positional relationship between the exhaust outlet 33a and the internal pipe 326 is also called a labyrinth structure (offset structure).

As described above, in a case where the exhaust outlet 33a and the internal pipe 326 are disposed so as to be shifted from each other in the radial direction of the internal pipe 326 in the main body case 320, even when the exhaust fluid introduced into the main body case 320 passes through the internal pipe 326 in a state of containing the exhaust gas and the drain water (or water vapor), the exhaust outlet 33a is not present at the passage destination (on the extension of the internal pipe 326), and thus the exhaust fluid collides with a wall surface (here, the rear wall portion 323) of the main body case 320. As a result, the drain water or water vapor contained in the exhaust fluid is captured (trapped) by the rear wall portion 323. The drain water or water vapor is then separated from the exhaust gas. Therefore, the risk that the drain water or water vapor is discharged together with the exhaust gas from the exhaust outlet 33a to the outside of the housing 10 and scattered around is further reduced.

### [3-6. Another configuration of fuel cell system]

Although the configuration in which the silencer 32 (see Fig. 6A and the like) is disposed in the exhaust path ER has been described above, the fuel cell system 1 can be configured without disposing the silencer 32.

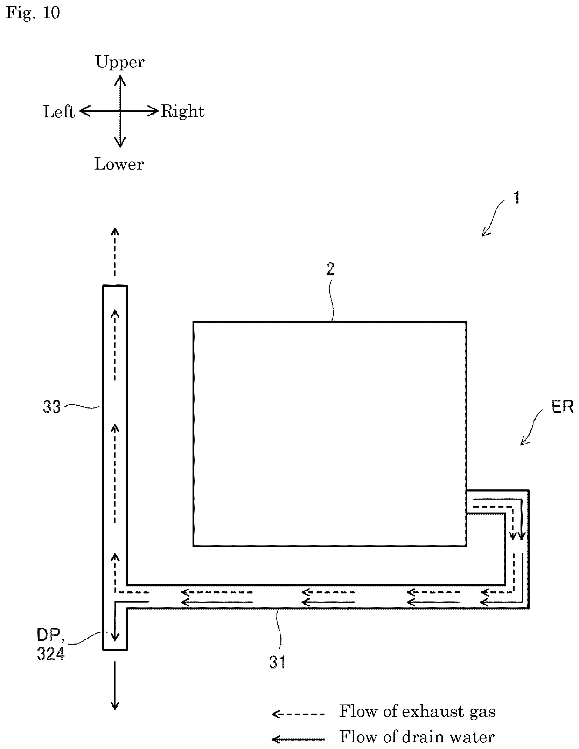

Fig. 10 is a front view schematically illustrating another configuration of the exhaust path ER of the fuel cell system 1. As illustrated in the drawing, the exhaust path ER may be configured by directly connecting the discharge pipe 33 to the exhaust introduction pipe 31, and the drain pipe 324 may be disposed to be branched from the exhaust path ER. The drain pipe 324 can be configured by, for example, a pipe (for example, a tee pipe disposed at a branch portion) protruding downward from the middle of the exhaust path ER. In such a configuration, the drain pipe 324 alone constitutes the drain portion DP disposed to be branched from the exhaust path ER of the fuel cell module 2.

Even in the configuration of Fig. 10, the exhaust gas, which is contained in the exhaust fluid discharged from the fuel cell module 2 and flowing through the exhaust path ER, flows upward through the discharge pipe 33 and is discharged to the outside of the housing 10 (see Fig. 4A and the like). On the other hand, the drain water contained in the exhaust fluid receives a downward force due to gravity. Thus, the drain water flows downward through the drain pipe 324 constituting the drain portion DP and is discharged. Therefore, the drain water and the exhaust gas can be separately discharged. As a result, the risk that the drain water is discharged from the exhaust path ER together with the exhaust gas and scattered around is reduced.

### <4. Cover attachment structure>

The pillars 12, the front side surface upper covers 16, and the rear side surface upper covers 20 illustrated in Figs. 1A and 1B are attached by both fastening with bolts and fitting. This achieves easy attachment while achieving blindness of the bolts. Details will be described below.

Note that, as described above, the left front pillar 12a and the right front pillar 12b have symmetrical shapes in the left-right direction, and the front side surface upper left cover 16a and the front side surface upper right cover 16b have symmetrical shapes in the left-right direction. Similarly, the left rear pillar 12c and the right rear pillar 12d have symmetrical shapes in the left-right direction, and the rear side surface upper left cover 20a and the rear side surface upper right cover 20b have symmetrical shapes in the left-right direction. Furthermore, the left front pillar 12a and the right front pillar 12b have symmetrical shapes in the front-rear direction, and the left rear pillar 12c and the right rear pillar 12d have symmetrical shapes in the front-rear direction. In addition, the front side surface upper left cover 16a and the front side surface upper right cover 16b have symmetrical shapes in the front-rear direction, and the rear side surface upper left cover 20a and the rear side surface upper right cover 20b have symmetrical shapes in the front-rear direction. Based on this structure, a method of attaching the right front pillar 12b and the front side surface upper right cover 16b will be described below as an example. The other members can be similarly attached by reversing the front-rear direction and the left-right direction in the method of attaching the right front pillar 12b and the front side surface upper right cover 16b.

### [4-1. Configuration of each cover]

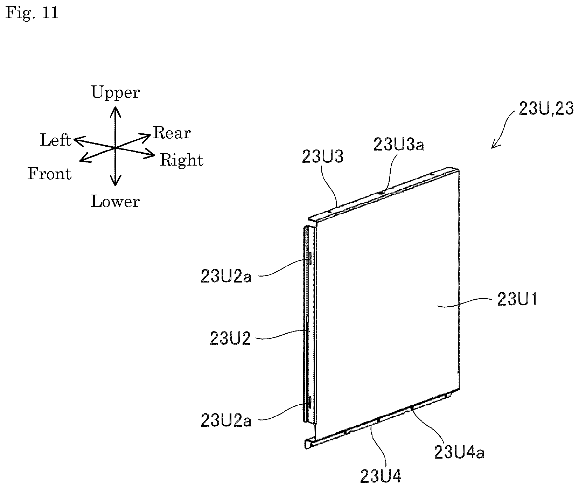

First, the right side surface cover 23 (see Fig. 1A) into which the pillar 12 is fitted will be described. Fig. 11 is a perspective view of a right side surface upper cover 23U of the housing 10. Note that the right side surface upper cover 23U is an upper cover in a case where the right side surface cover 23 is divided in the vertical direction. The right side surface upper cover 23U includes a right side surface upper cover main body 23U1, a front bent portion 23U2, an upper bent portion 23U3, a lower bent portion 23U4, and a rear bent portion (not illustrated).

The right side surface upper cover main body 23U1 is a flat plate extending in the front-rear direction and the vertical direction. The front bent portion 23U2 is formed by bending a front end portion of the right side surface upper cover main body 23U1 leftward. In the front bent portion 23U2, two first through-holes 23U2a penetrating in the front-rear direction are formed at an interval in the vertical direction. Note that the number of the first through-holes 23U2a is not limited to two as described above, and may be one or three or more. The rear bent portion is formed symmetrically with the front bent portion 23U2 in the front-rear direction.

The upper bent portion 23U3 is formed by bending an upper end portion of the right side surface upper cover main body 23U1 leftward. In the upper bent portion 23U3, bolt insertion holes 23U3a penetrating in the vertical direction are formed at a plurality of positions in the front-rear direction.

The lower bent portion 23U4 is formed by bending a lower end portion of the right side surface upper cover main body 23U1 leftward and further bending a left end downward. In the lower bent portion 23U4, bolt insertion holes 23U4a penetrating in the left-right direction are formed at a plurality of positions in the front-rear direction.

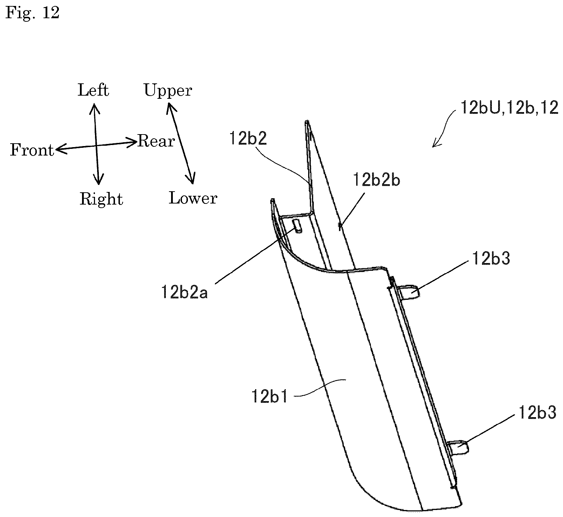

Fig. 12 is a perspective view of a right front upper pillar 12bU of the housing 10. Note that the right front upper pillar 12bU is an upper pillar (cover) in a case where the right front pillar 12b (see Fig. 1A) is divided in the vertical direction. The right front upper pillar 12bU includes a right front upper pillar main body 12b 1 and a bent portion 12b2.

The right front upper pillar main body 12b 1 is configured by an arc-shaped curved surface cover having a central angle of 90° when viewed in the vertical direction. That is, the right front upper pillar main body 12b 1 extends rightward from a front left end portion, and changes its direction along the arc having the central angle of 90° to extend rearward. At a right rear end portion of the right front upper pillar main body 12b1, two protrusions 12b3 protruding rearward are formed at an interval in the vertical direction. Note that the number of the protrusions 12b3a is not limited to two as described above, and may be one or three or more. However, the positions of the protrusions 12b3 correspond to the positions of the first through-holes 23U2a of the right side surface upper cover 23U.

The bent portion 12b2 is formed by extending rearward from the front left end portion of the right front upper pillar main body 12b 1 and further bending a rear end leftward. In the bent portion 12b2, two second through-holes 12b2a penetrating in the left-right direction are formed at an interval in the vertical direction. Note that the number of the second through-holes 12b2a is not limited to two as described above, and may be one or three or more. Furthermore, in the bent portion 12b2, bolt insertion holes 12b2b penetrating in the front-rear direction are formed at a plurality of positions in the vertical direction.

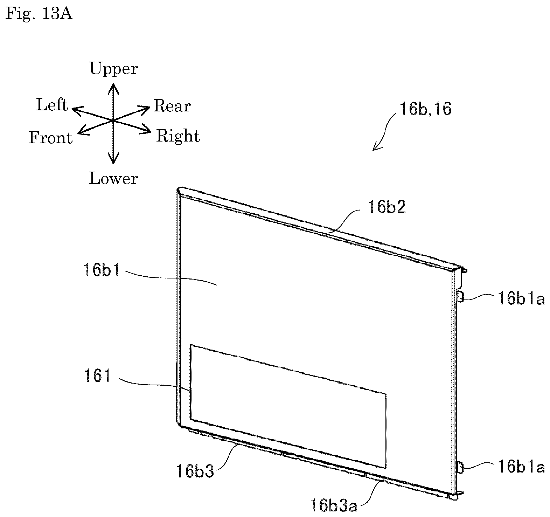

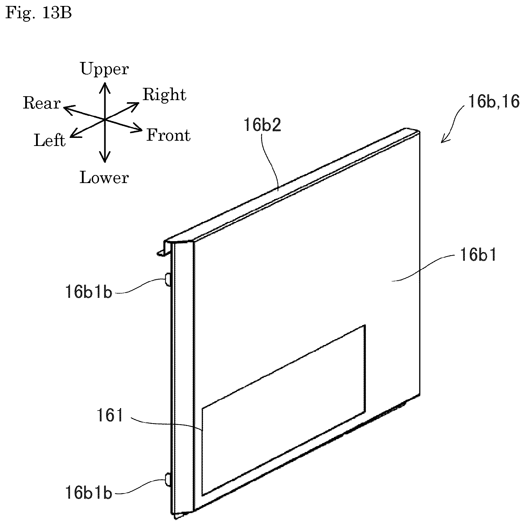

Fig. 13A is a perspective view of the front side surface upper right cover 16b of the housing 10 as viewed from the right front. Fig. 13B is a perspective view of the front side surface upper right cover 16b as viewed from the left front. As illustrated in these drawings, the front side surface upper right cover 16b includes a front side surface upper right cover main body 16b1, an upper bent portion 16b2, and a lower protruding portion 16b3.

The front side surface upper right cover main body 16b1 is a flat plate extending in the left-right direction and the vertical direction. The front surface opening portion 161 described above is formed on the lower left side of the front side surface upper right cover main body 16b1. At a right end portion of the front side surface upper right cover main body 16b1, two first protrusions 16b1a protruding rightward are formed at an interval in the vertical direction. Note that the number of the first protrusions 16b1a is not limited to two as described above, and may be one or three or more. However, the positions of the first protrusions 16b1a correspond to the positions of the second through-holes 12b2a of the right front upper pillar 12bU.

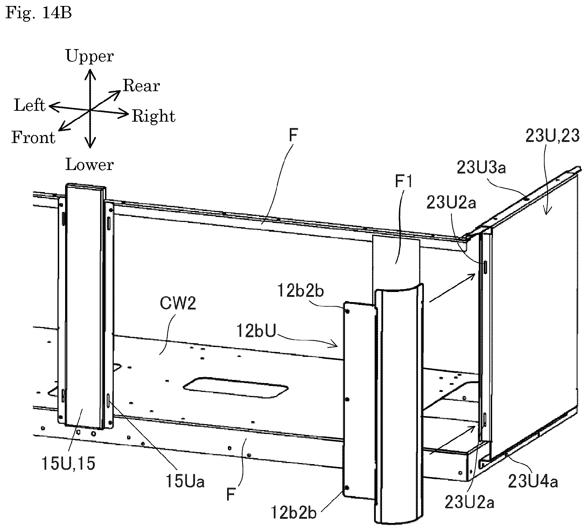

In addition, at a left end portion of the front side surface upper right cover main body 16b1, two second protrusions 16b1b protruding rearward are formed at an interval in the vertical direction. Note that the number of the second protrusions 16b1b is not limited to two as described above, and may be one or three or more. However, the positions of the second protrusions 16b1b correspond to the positions of fixing holes 15Ua provided in a front side surface partition upper frame 15U (see Fig. 14B). Note that the front side surface partition upper frame 15U is an upper frame in a case where the front side surface partition frame 15 (see Fig. 1A) is divided in the vertical direction.

The upper bent portion 16b2 is formed in a shape extending rearward from an upper end portion of the front side surface upper right cover main body 16b1, bent downward, and then further extending rearward. In the upper bent portion 16b2, bolt insertion holes (not illustrated) penetrating in the vertical direction are formed at a plurality of positions in the left-right direction.

The lower protruding portion 16b3 is formed to extend rearward from a lower end portion of the front side surface upper right cover main body 16b1 and further extend downward. In the lower protruding portion 16b3, bolt fixing cutout portions 16b3a (see Fig. 13A) penetrating in the front-rear direction are formed at a plurality of positions in the left-right direction.

### [4-2. Method of attaching each cover]

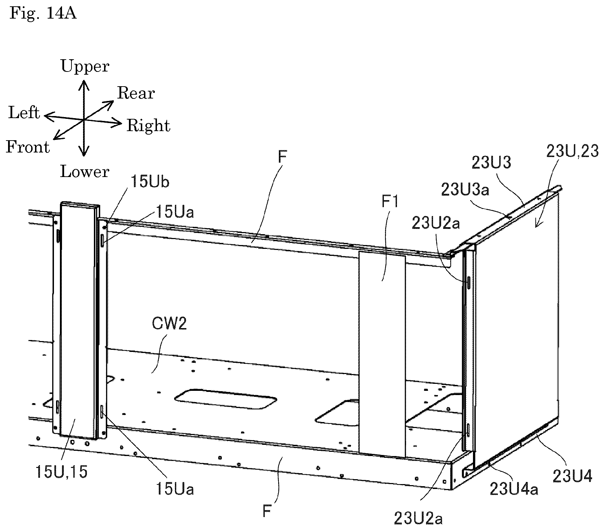

Figs. 14A to 14B are perspective views schematically illustrating a procedure for attaching the right front upper pillar 12bU and the front side surface upper right cover 16b to a frame F included in the housing 10. Note that the frame F includes not only a frame that supports (fixes) the upper surface cover 13 illustrated in Fig. 4A and the like but also a frame that supports the first ceiling wall CW1 and the second ceiling wall CW2.

First, as illustrated in Fig. 14A, the right side surface upper cover 23U is fixed to the frame F with bolts. For example, the holes 23U3a provided in the upper bent portion 23U3 of the right side surface upper cover 23U are aligned with holes (not illustrated) provided at predetermined positions of the frame F. Bolts are inserted into the holes 23U3a from above, and nuts are disposed on the frame F on the side opposite to the upper bent portion 23U3 and screwed. Furthermore, holes provided at predetermined positions of the frame F and the holes 23U4a provided in the lower bent portion 23U4 are aligned, bolts are inserted into the holes 23U4a from the right, and nuts are disposed on the frame F on the opposite side of the lower bent portion 23U4 and screwed. As a result, the right side surface upper cover main body 23U1 is bolted to the frame F.

Note that the bolts inserted into the holes 23U4a are hidden by a right side surface lower cover (not illustrated) when the right side surface lower cover is attached to the frame F. Note that the right side surface lower cover is a lower cover in a case where the right side surface cover 23 (see Fig. 1A) is divided in the vertical direction. On the other hand, the bolts inserted from above into the holes 23U3a of the upper bent portion 23U3 are not hidden by another member, but are located on the upper side of the housing 10, and thus it is difficult to visually recognize the bolts even when viewed from below.

In addition, the front side surface partition upper frame 15U is bolted to the center position of the frame F in the left-right direction. Hole portions 15Ub penetrating in the front-rear direction are formed at predetermined positions of the front side surface partition upper frame 15U. Therefore, holes at predetermined positions of the frame F and the hole portions 15Ub of the front side surface partition upper frame 15U are aligned, bolts are inserted into the hole portions 15Ub from the front, and nuts are disposed on the opposite side and screwed. As a result, the front side surface partition upper frame 15U is bolted to the frame F.

Next, as illustrated in Fig. 14B, the protrusions 12b3 (see Fig. 12) of the right front upper pillar 12bU are inserted into the first through-holes 23U2a of the right side surface upper cover 23U from the front. As a result, the right front upper pillar 12bU is temporarily fixed to the right side surface upper cover 23U.

Thereafter, the holes 12b2b of the right front upper pillar 12bU and holes (not illustrated) provided in a fixing plate F1 fixed at a predetermined position of the frame F are aligned. Bolts are then inserted into the holes 12b2b, and nuts are disposed on the opposite side and screwed. As a result, the right front upper pillar 12bU is bolted to the frame F (the fixing plate F1).

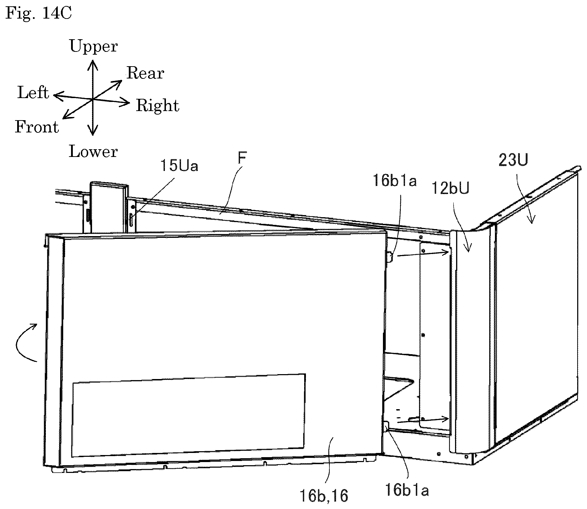

Subsequently, as illustrated in Fig. 14C, the first protrusions 16b1a of the front side surface upper right cover 16b are inserted into the second through-holes 12b2a (see Fig. 12) of the right front upper pillar 12bU. At this time, the front side surface upper right cover 16b is moved obliquely rearward to the right in a state where a left end portion of the front side surface upper right cover 16b is located forward of a right end portion of the front side surface upper right cover 16b. When the first protrusions 16bla are inserted into the second through-holes 12b2a, the front side surface upper right cover 16b is temporarily fixed to the right front upper pillar 12bU.

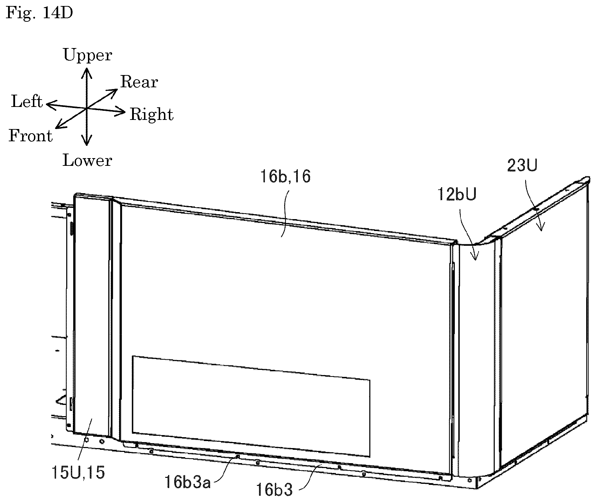

Next, the left end portion of the front side surface upper right cover 16b is pushed rearward. As a result, the front side surface upper right cover 16b rotates about the right end portion, and the second protrusions 16b1b of the front side surface upper right cover 16b enter the fixing holes 15Ua of the front side surface partition upper frame 15U from the front side (see Fig. 14 D). In this state, bolts are inserted from above into the holes provided in the upper bent portion 16b2 of the front side surface upper right cover 16b (see Fig. 13A), and nuts are disposed on the frame F on the opposite side and screwed. Furthermore, bolts are inserted into the cutout portions 16b3a of the lower protruding portion 16b3 from the front, and nuts are disposed on the frame F on the opposite side and screwed. As a result, the front side surface upper right cover 16b is fixed to the frame F.

Note that the bolts inserted into the cutout portions 16b3a of the lower protruding portion 16b3 are hidden by the right front door 14b in the closed state. On the other hand, the bolts inserted from above into the holes of the upper bent portion 16b2 of the front side surface upper right cover 16b are not hidden by another member, but are located on the upper side of the housing 10, and thus it is difficult to visually recognize the bolts even when viewed from below.

As described above, in the front side surface upper right cover 16b, the protruding direction of the first protrusions 16b1a (left-right direction) and the protruding direction of the second protrusions 16b1b are different directions, and more specifically, they are directions orthogonal to each other. As a result, as described above, the front side surface upper right cover 16b can be finally attached to the frame F by two movements of insertion into the right front upper pillar 12bU and rotation of the left end portion. Therefore, even if the front side surface upper right cover 16b is heavy, the front side surface upper right cover 16b can be attached to the frame F by one worker. In addition, since the bolts used for fastening are hidden by other members, the appearance is improved.

### <5. Points to be noted>

Various changes can be made to various technical features disclosed in the present specification without departing from the spirit of the technical creation. In addition, a plurality of embodiments and modifications described in the present specification may be implemented in combination to the extent possible.

### <6. Additional notes>

The fuel cell system and the mono-generation apparatus described in the present embodiment can be expressed as follows.

A fuel cell system according to additional note (1) is
a fuel cell system including:
a fuel cell module; and
a drain portion disposed to be branched from an exhaust path of the fuel cell module.

A fuel cell system according to additional note (2) is the fuel cell system according to additional note (1), wherein
the drain portion includes a main body case, and
the main body case is provided with an exhaust inlet serving as an inlet for exhaust fluid discharged from the fuel cell module and an exhaust outlet serving as an outlet for exhaust gas contained in the exhaust fluid.

A fuel cell system according to additional note (3) is the fuel cell system according to additional note (2), wherein
the drain portion includes:
a partition wall that partitions an inside of the main body case between a side of the exhaust inlet and a side of the exhaust outlet; and
an internal pipe that is provided to penetrate the partition wall and allows the side of the exhaust inlet and the side of the exhaust outlet inside the main body case to communicate with each other.

A fuel cell system according to additional note (4) is the fuel cell system according to additional note (3), wherein
the exhaust outlet is located outside the internal pipe as viewed in a central axis direction of the internal pipe.

A fuel cell system according to additional note (5) is the fuel cell system according to any one of additional notes (2) to (4), wherein
the drain portion includes a drain pipe connected to a bottom portion of the main body case.

A fuel cell system according to additional note (6) is the fuel cell system according to additional note (5), wherein
the partition wall has an opening in a lower portion.

A fuel cell system according to additional note (7) is the fuel cell system according to additional note (5) or (6), wherein
the bottom portion of the main body case includes a first end portion located on the side of the exhaust inlet relative to the partition wall and a second end portion located on the side of the exhaust outlet relative to the partition wall, and
the second end portion is located below the first end portion.

A fuel cell system according to additional note (8) is the fuel cell system according to additional note (7), wherein
the drain pipe is connected to the bottom portion of the main body case on a side closer to the second end portion than the partition wall.

A fuel cell system according to additional note (9) is the fuel cell system according to any one of additional notes (2) to (8), wherein
the exhaust outlet is disposed at a position higher than a retention height of drain water separated from the exhaust path in the main body case.

A fuel cell system according to additional note (10) is the fuel cell system according to any one of additional notes (2) to (9), further including
a discharge pipe connected to the main body case and having the exhaust outlet, wherein
the discharge pipe includes an inclined pipe extending obliquely upward from the main body case.

A fuel cell system according to additional note (11) is the fuel cell system according to additional note (10), wherein
the discharge pipe includes a connection pipe connected to the inclined pipe and extending upward.

A fuel cell system according to additional note (12) is the fuel cell system according to any one of additional notes (2) to (11), wherein
a diameter of the main body case is larger than a diameter of an exhaust introduction pipe that guides the exhaust fluid to the main body case.

A fuel cell system according to additional note (13) is the fuel cell system according to any one of additional notes (1) to (12), wherein
the drain portion is disposed below the fuel cell module.

A fuel cell system according to additional note (14) is the fuel cell system according to any one of additional notes (1) to (13), wherein
the drain portion includes a water seal portion that stores drain water separated from the exhaust path in a part of a drain path.

A fuel cell system according to additional note (15) is the fuel cell system according to any one of additional notes (1) to (14), further including
a silencer disposed in a middle of the exhaust path, wherein
the silencer includes the drain portion.

A mono-generation apparatus according to additional note (16) includes
the fuel cell system according to any one of additional notes (1) to (15).

### LIST OF REFERENCE SIGNS

- 1: Fuel cell system
- 2: Fuel cell module
- 31: Exhaust introduction pipe
- 31a: Exhaust inlet
- 32: Silencer
- 33: Discharge pipe
- 33a: Exhaust outlet
- 131: Exhaust gas outlet
- 320: Main body case
- 320a: Bottom portion
- 320a1: First end portion
- 320a2: Second end portion
- 324: Drain portion
- 324a: Water seal portion
- 325: Partition wall
- 325al: Opening
- 326: Internal pipe
- 331: Inclined pipe
- 332: Connection pipe
- ER: Exhaust path
- HP: Position
- MG: Mono-generation apparatus
- S: Drain path

## Claims

1. A fuel cell system comprising:
a fuel cell module; and
a drain portion disposed to be branched from an exhaust path of the fuel cell module.

2. The fuel cell system according to claim 1, wherein
the drain portion includes a main body case, and
the main body case is provided with an exhaust inlet serving as an inlet for exhaust fluid discharged from the fuel cell module and an exhaust outlet serving as an outlet for exhaust gas contained in the exhaust fluid.

3. The fuel cell system according to claim 2, wherein
the drain portion includes:
a partition wall that partitions an inside of the main body case between a side of the exhaust inlet and a side of the exhaust outlet; and
an internal pipe that is provided to penetrate the partition wall and allows the side of the exhaust inlet and the side of the exhaust outlet inside the main body case to communicate with each other.

4. The fuel cell system according to claim 3, wherein the exhaust outlet is located outside the internal pipe as viewed in a central axis direction of the internal pipe.

5. The fuel cell system according to claim 2, wherein the drain portion includes a drain pipe connected to a bottom portion of the main body case.

6. The fuel cell system according to claim 5, wherein the partition wall has an opening in a lower portion.

7. The fuel cell system according to claim 5, wherein
the bottom portion of the main body case includes a first end portion located on the side of the exhaust inlet relative to the partition wall and a second end portion located on the side of the exhaust outlet relative to the partition wall, and
the second end portion is located below the first end portion.

8. The fuel cell system according to claim 7, wherein the drain pipe is connected to the bottom portion of the main body case on a side closer to the second end portion than the partition wall.

9. The fuel cell system according to claim 2, wherein the exhaust outlet is disposed at a position higher than a retention height of drain water separated from the exhaust path in the main body case.

10. The fuel cell system according to claim 2, further comprising
a discharge pipe connected to the main body case and having the exhaust outlet, wherein
the discharge pipe includes an inclined pipe extending obliquely upward from the main body case.

11. The fuel cell system according to claim 10, wherein the discharge pipe includes a connection pipe connected to the inclined pipe and extending upward.

12. The fuel cell system according to claim 2, wherein a diameter of the main body case is larger than a diameter of an exhaust introduction pipe that guides the exhaust fluid to the main body case.

13. The fuel cell system according to claim 1, wherein the drain portion is disposed below the fuel cell module.

14. The fuel cell system according to claim 1, wherein the drain portion includes a water seal portion that stores drain water separated from the exhaust path in a part of a drain path.

15. The fuel cell system according to claim 1, further comprising
a silencer disposed in a middle of the exhaust path, wherein
the silencer includes the drain portion.

16. A mono-generation apparatus comprising the fuel cell system according to any one of claims 1 to 15.
